# EUROPEAN PATENT APPLICATION

(11) **EP 4 836 575 A1**
(43) Date of publication of application: **04.11.2026**
(21) Application number: 24913534.4
(22) Date of filing: 24.12.2024
(51) Int. Cl.: H04W 74/0816, H04W 74/00, H04W 74/04, H04L 5/00, H04W 76/15, H04W 84/12, H04W 24/08, H04W 72/0453

(54) **CHANNEL SWITCHING TECHNIQUE FOR ACCESSING NON-PRIMARY CHANNEL**

(30) Priority: 26.12.2023 KR 20230191164; 07.02.2024 KR 20240019061; 12.05.2024 US 202463645943 P; 12.07.2024 KR 20240092681; 28.08.2024 KR 20240116127; 29.08.2024 KR 20240116934; 13.12.2024 KR 20240186187; 18.12.2024 KR 20240190348
(71) Applicant: LG Electronics Inc., Yeongdeungpo-gu Seoul 07336 (KR)
(72) Inventor: CHA, Dongju, Seoul 06772 (KR); CHOI, Jinsoo, Seoul 06772 (KR); LEE, Hongwon, Seoul 06772 (KR); JANG, Insun, Seoul 06772 (KR); BAEK, Sunhee, Seoul 06772 (KR); KIM, Geonhwan, Seoul 06772 (KR); YOON, Yelin, Seoul 06772 (KR)
(74) Representative: Frenkel, Matthias Alexander
(86) International application number: PCT/KR2024/021016
(87) International publication number: WO 2025/143743

(57) **Abstract**

The technical features of the present disclosure may relate to an apparatus or method performed in a wireless local area network (WLAN) system. For example, the present specification proposes a technical feature of suggesting an optimal timing for performing non-primary channel access (NPCA), depending on which PPDU format/type/version an overlapping basic service set (OBSS) traffic has. For example, a station (STA) may receive an OBSS signal. For example, on the basis of the OBSS signal, the STA may access an NPCA primary channel, attempt/perform switching to the NPCA primary channel, or trigger or perform an NPCA operation. The NPCA primary channel may be accessed on the basis of at least one of: a basic network allocation vector (NAV) set for the primary channel on the basis of the OBSS signal; and a wait time associated with the OBSS signal. For example, the wait time associated with the OBSS signal may be set on the basis of NAVWaitTime.

## Description

### TECHNICAL FIELD

The present specification relates to a wireless local area network (WLAN) system, and more specifically, relates to an improved method and apparatus for accessing a channel other than a primary channel of a wireless LAN system.

### BACKGROUND ART

A wireless LAN or wireless local area network (WLAN) has been improved in various ways. For example, an EHT (Extreme high throughput) specification may use newly proposed increased bandwidth, an improved PPDU (PHY layer protocol data unit) structure, an improved sequence, a HARQ (Hybrid automatic repeat request) technique, and the like. The EHT specification may be referred to as the IEEE 802.11be specification.

In order to support high throughput and high data rates, the EHT specification may use wide bandwidth (e.g., 160/320 MHz), 16 streams, and/or multi-link (or multi-band) operation, and the like.

In the EHT specification, wide bandwidth (e.g., 160/240/320 MHz) may be used for high throughput. In addition, preamble puncturing and multiple RU transmission may be used to efficiently use bandwidth.

A WLAN system may be further improved through a UHR (Ultra High Reliability) specification. The UHR system may be referred to as the IEEE 802.11bn specification. The UHR system aims to support ultra-high reliability in signal transmission to a STA. For this, the UHR system is considering various technologies to support high throughput, low latency, and extended range.

A WLAN system performs medium access based on a primary channel. For example, information related to a primary channel having a 20 MHz bandwidth is transmitted to several STAs through a management frame, and a STA attempting frame exchange can perform an access to the primary channel.

### SPECIFICATION

### TECHNICAL PROBLEM

A current 802.11 BSS Operating Channel may be configured based on a Primary Channel (PCH) and one or more Secondary Channels (SCH). In order to transmit a frame based on the BSS operating channel, a Back-off must always be performed on the PCH, and a Back-off counter (BC) on the PCH must be 0. Accordingly, in a situation where the PCH is determined to be BUSY, a wireless channel/medium cannot be used. However, according to the prior art, since only the PCH is in a BUSY state and even if an SCH (or non-primary channel) other than the PCH is in an IDLE state the corresponding SCH cannot be used, medium efficiency may be considerably reduced. However, in order to trigger an operation of accessing an SCH (or non-primary channel), various conditions must be considered.

### TECHNICAL SOLUTION

The present specification proposes various technical features. The various technical features of the present specification may be applied to various types of STAs/devices.

For example, the present specification proposes a technical feature that proposes an optimal time point for performing NPCA (Non-Primary Channel Access) according to which PPDU format/type/version OBSS traffic (e.g., an OBSS PPDU) has.

For example, a STA (station) may receive an OBSS (Overlapping Basic Service Set) signal. For example, based on the OBSS signal, the STA may perform an access to an NPCA (Non-primary Channel Access) primary channel, attempt/perform a switch to the NPCA primary channel, or trigger/perform an NPCA operation. The access to the NPCA primary channel may be performed based on at least one of a Basic NAV (Network Allocation Vector) set for a primary channel based on the OBSS signal and a wait time related to the OBSS signal. The wait time related to the OBSS signal may be set based on a NAVWaitTime.

### ADVANTAGEOUS EFFECTS

The technical features described in the present specification can generate various advantageous effects. For example, the NPCA triggering condition proposed in the present specification can acquire, according to a PPDU format of OBSS traffic, information required to perform NPCA at the earliest time point. In addition, the technical feature proposed in the present specification causes a STA performing NPCA/SCA to perform NPCA for as long a time as possible by switching to a Non-Primary channel at the earliest time point or an optimized time point based on the information acquired by the STA.

### BRIEF DESCRIPTION OF THE DRAWINGS

Figure 1 illustrates an example of a transmitting device and/or receiving device of the present specification.
Figure 2 is a conceptual diagram illustrating a structure of a wireless LAN (WLAN).
Figure 3 is a diagram illustrating a general link setup process.
Figure 4 illustrates an embodiment of a multi-link (ML).
Figure 5 illustrates a PPDU transmitted/received at a STA of the present specification.
Figure 6 is a diagram illustrating an arrangement of resource units (RUs) used for a 20 MHz PPDU.
Figure 7 is a diagram illustrating an arrangement of resource units (RUs) used for a 40 MHz PPDU.
Figure 8 is a diagram illustrating an arrangement of resource units (RUs) used for an 80 MHz PPDU.
Figure 9 illustrates an operation according to UL-MU.
Figure 10 illustrates an example of a channel used/supported/defined within a 2.4 GHz band.
Figure 11 illustrates an example of a channel used/supported/defined within a 5 GHz band.
Figure 12 illustrates an example of a channel used/supported/defined within a 6 GHz band.
Figure 13 illustrates an example of a header of a MAC frame.
Figure 14 illustrates a modified example of a transmitting device and/or receiving device of the present specification.
Figure 15 illustrates an example of NAV (network allocation vector) setting.
Figure 16 illustrates an example related to a primary channel, a secondary channel, and channel extension/bonding.
Figure 17 relates to an example of channel access related to an 80 MHz channel.
Figure 18 illustrates an example of an SCA process.
Figure 19 is an example of a network topology related to an example of the present specification.
Figure 20 illustrates an example related to Case 2-1.
Figure 21 is a procedure flowchart related to a transmitting STA.
Figure 22 is a procedure flowchart related to a receiving STA.
Figure 23 is another procedure flowchart illustrating an example of the present specification.
Figure 24 is another procedure flowchart illustrating an example of the present specification.
Figure 25 illustrates an example related to channelization.
Figure 26 illustrates an example of SCA/NPCA performance at 320 MHz.
Figure 27 illustrates an example of SCA/NPCA performance at 320 MHz.

### DESCRIPTION OF EXEMPLARY EMBODIMENTS

As used herein, "A or B" can mean "only A," "only B," or "both A and B." Alternatively, "A or B" can be interpreted as "A and/or B." For example, as used herein, "A, B or C" can mean "only A," "only B," "only C," or "any combination of A, B, and C."

As used herein, a slash (/) or a comma can mean "and/or." For example, "A/B" can mean "A and/or B." Accordingly, "A/B" can mean "only A," "only B," or "both A and B." For example, "A, B, C" may mean "A, B, or C."

In the present specification, "at least one of A and B" may mean "only A," "only B," or "both A and B." Furthermore, in the present specification, the expressions "at least one of A or B" or "at least one of A and/or B" may be interpreted identically to "at least one of A and B."

Furthermore, parentheses used herein may mean "for example." Specifically, when "control information (UHR-Signal field)" is indicated, the "UHR-Signal field" may be suggested as an example of "control information." In other words, the "control information" in the present specification is not limited to the "UHR-Signal field," and the "UHR-Signal field" may be proposed as an example of "control information." Furthermore, even when "control information (UHR-Signal field)" is indicated, the "UHR-Signal field" may be proposed as an example of "control information."

Furthermore, "a/an" as used herein may mean "at least one" or "one or more." Furthermore, terms ending in "(s)" may mean "at least one" or "one or more."

Furthermore, the expressions "based on," "on the basis of," or "according to" used in the present specification mean "based at least in part on," and do not mean "based solely on" a single element one.

Technical features individually described in a single drawing in the present specification may be implemented individually or simultaneously.

The following examples of the present specification may be applied to various wireless communication systems. For example, the following examples of the present specification may be applied to wireless local area network (WLAN) systems. For example, the present specification may be applied to the IEEE 802.11a/g/n/ac/ax/be/bn standards. Furthermore, the examples of the present specification may also be applied to the Ultra High Reliability (UHR) standard or next-generation WLAN standards that enhance IEEE 802.11bn. Additionally, examples of the present specification may be applied to mobile communication systems. For example, it may be applied to mobile communication systems based on Long Term Evolution (LTE) and its evolutions based on the 3rd Generation Partnership Project (3GPP) standards.

Hereinafter, to explain the technical features of the present specification, technical features to which the present specification can be applied will be described.

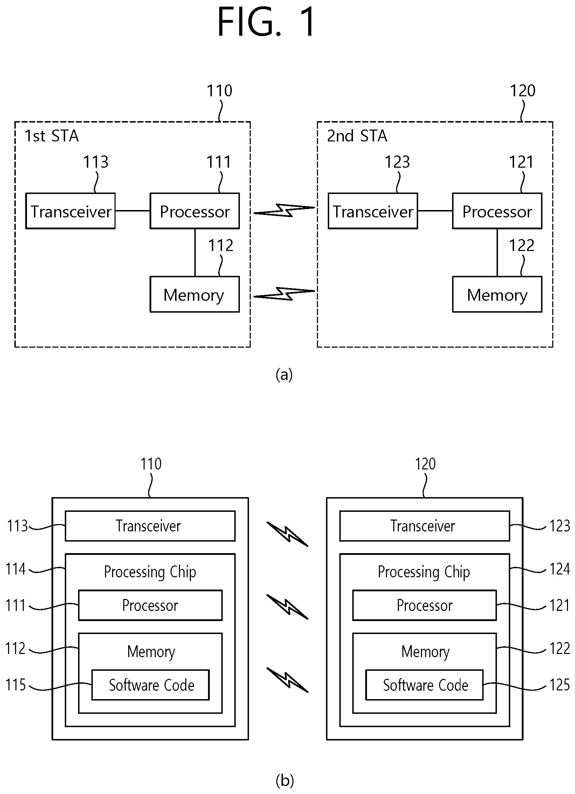

Figure 1 illustrates an example of a transmitting device and/or receiving device of the present specification.

The example of Figure 1 can perform various technical features described below. Figure 1 relates to at least one STA (station). For example, the STAs (110, 120) of the present specification may also be referred to by various names, such as a mobile terminal, a wireless device, a wireless transmit/receive unit (WTRU), a user equipment (UE), a mobile station (MS), a mobile subscriber unit (MS), or simply a user. The STAs (110, 120) of the present specification may also be referred to by various names, such as a network, a base station, a Node-B, an access point (AP), a repeater, a router, or a relay. The STAs (110, 120) of the present specification may be referred to by various names, such as a receiving apparatus, a transmitting apparatus, a receiving STA, a transmitting STA, a receiving device, or a transmitting device.

For example, the STAs (110, 120) of the present specification may function as an access point (AP) or a non-AP. That is, the STAs (110, 120) of the present specification may perform the functions of an AP and/or a non-AP STA. In the present specification, an AP may also be referred to as an AP STA.

The STAs (110, 120) of the present specification may support various communication standards other than the IEEE 802.11 standard. For example, they may support communication standards based on the 3GPP standard (e.g., LTE, LTE-A, 5G NR standards). Furthermore, the STAs of the present specification may be implemented in various devices, such as mobile phones, vehicles, and personal computers. Additionally, the STA of the present specification can support communication for various communication services, such as voice calls, video calls, data communications, and autonomous driving (self-driving).

In the present specification, the STAs (110, 120) may include a medium access control (MAC) and a physical layer interface for wireless media that conforms to the IEEE 802.11 standard.

The STAs (110, 120) are described below based on sub-drawing (a) of FIG. 1.

The first STA (110) may include a processor (111), memory (112), and a transceiver (113). The illustrated processor, memory, and transceiver may be implemented as separate chips, or at least two blocks/functions may be implemented on a single chip.

The transceiver (113) of the first STA performs signal transmission and reception operations. Specifically, it can transmit and receive IEEE 802.11 packets (e.g., IEEE 802.11a/b/g/n/ac/ax/be, etc.).

For example, the first STA (110) can perform the intended operation of an AP. For example, the processor (111) of the AP can receive a signal via the transceiver (113), process the received signal, generate a transmission signal, and perform control for signal transmission. The memory (112) of the AP can store a signal received via the transceiver (113) (e.g., a received signal) and a signal to be transmitted via the transceiver (e.g., a transmitted signal).

For example, the second STA (120) can perform the intended operation of a non-AP STA. For example, the transceiver (123) of the non-AP can perform signal transmission and reception operations. Specifically, it can transmit and receive IEEE 802.11 packets (e.g., IEEE 802.11a/b/g/n/ac/ax/be, etc.).

For example, the processor (121) of the non-AP STA can receive signals via the transceiver (123), process the received signals, generate transmission signals, and perform control for signal transmission. The memory (122) of the non-AP STA can store signals received via the transceiver (123) (e.g., received signals) and signals to be transmitted via the transceiver (e.g., transmitted signals).

For example, the operations of a device designated as an AP in the following specification can be performed by the first STA (110) or the second STA (120). For example, if the first STA (110) is an AP, the operation of the device indicated as the AP is controlled by the processor (111) of the first STA (110), and a related signal may be transmitted or received through the transceiver (113) controlled by the processor (111) of the first STA (110). In addition, control information related to the operation of the AP or the transmission/reception signal of the AP may be stored in the memory (112) of the first STA (110). In addition, if the second STA (110) is an AP, the operation of the device indicated as the AP is controlled by the processor (121) of the second STA (120), and a related signal may be transmitted or received through the transceiver (123) controlled by the processor (121) of the second STA (120). In addition, control information related to the operation of the AP or the transmission/reception signals of the AP may be stored in the memory (122) of the second STA (110).

For example, the operation of a device indicated as a non-AP (or User-STA) in the following specification may be performed in the first STA (110) or the second STA (120). For example, if the second STA (120) is a non-AP, the operation of the device indicated as a non-AP may be controlled by the processor (121) of the second STA (120), and related signals may be transmitted or received through the transceiver (123) controlled by the processor (121) of the second STA (120). In addition, control information related to the operation of the non-AP or the transmission/reception signals of the AP may be stored in the memory (122) of the second STA (120). For example, if the first STA (110) is a non-AP, the operation of a device designated as a non-AP is controlled by the processor (111) of the first STA (110), and related signals may be transmitted or received through a transceiver (113) controlled by the processor (111) of the first STA (120). Furthermore, control information related to the operation of the non-AP or the transmission/reception signals of the AP may be stored in the memory (112) of the first STA (110).

In the following specifications, (transmitting/receiving) STA, first STA, second STA, STA1, STA2, AP, first AP, second AP, AP1, AP2, (transmitting/receiving) Terminal, (transmitting/receiving) device, (transmitting/receiving) apparatus, network, etc., may refer to the STA (110, 120) in Figure 1. For example, devices indicated without specific drawing symbols as (transmitting/receiving) STA, First STA, Second STA, STA1, STA2, AP, First AP, Second AP, AP1, AP2, (transmit/receive) terminal, (transmit/receive) device, (transmit/receive) apparatus, network, etc., may also refer to the STA (110, 120) in Figure 1. For example, in the following example, the operation of various STAs transmitting and receiving signals (e.g., PPDU) may be performed by the transceivers (113, 123) in Figure 1. Additionally, in the following example, the actions of various STAs generating transmission/reception signals or performing data processing or calculations in advance for transmission/reception signals may be performed by the processor (111, 121) in Figure 1. For example, an example of the operation of generating transmission/reception signals or performing data processing or calculations in advance for transmission/reception signals is: 1) determining/obtaining/configuring/calculating/decoding/encoding the bit information of the subfields (SIG, STF, LTF, Data) included in the PPDU; 2) determining/configuring/acquiring time resources or frequency resources (e.g., subcarrier resources) used for the subfields (SIG, STF, LTF, Data) included in the PPDU; 3) determining/configuring/acquiring specific sequences (e.g., pilot sequences, STF/LTF sequences, extra sequences applied to SIG) used for the subfields (SIG, STF, LTF, Data) included in the PPDU; 4) power control actions and/or power saving actions applied to STA, 5) actions related to determining/obtaining/configuring/calculating/decoding/encoding ACK signals. Additionally, in the following example, various information (e.g., information related to fields/subfields/control fields/parameters/power, etc.) used by various STAs for determining/acquiring/configuring/calculating/decoding/encoding transmission/reception signals may be stored in the memory (112, 122) shown in Figure 1.

The device/STA of sub-drawing (a) of FIG. 1 described above can be modified as shown in sub-drawing (b) of FIG. 1. The STAs (110, 120) of the present specification will now be described based on sub-drawing (b) of FIG. 1.

For example, the transceivers (113, 123) illustrated in sub-drawing (b) of FIG. 1 can perform the same functions as the transceivers illustrated in sub-drawing (a) of FIG. 1 described above. For example, the processing chip (114, 124) illustrated in sub-drawing (b) of FIG. 1 may include a processor (111, 121) and a memory (112, 122). The processor (111, 121) and the memory (112, 122) illustrated in sub-drawing (b) of FIG. 1 may perform the same functions as the processor (111, 121) and the memory (112, 122) illustrated in sub-drawing (a) of FIG. 1 described above.

The mobile terminal, wireless device, Wireless Transmit/Receive Unit (WTRU), User Equipment (UE), Mobile Station (MS), Mobile Subscriber Unit, user, user STA, network, Base Station, Node-B, Access Point (AP), repeater, router, relay, receiving device, transmitting device, receiving STA, transmitting STA, receiving Device, transmitting Device, receiving Apparatus, and/or transmitting Apparatus described below may refer to the STA (110, 120) illustrated in the sub-drawings (a)/(b) of FIG. 1, or may refer to the processing chip (114, 124) illustrated in the sub-drawing (b) of FIG. 1. That is, the technical feature of the present specification may be performed in the STA (110, 120) illustrated in the sub-drawings (a)/(b) of FIG. 1, or may be performed only in the processing chip (114, 124) illustrated in the sub-drawings (b) of FIG. 1. For example, the technical feature that the transmitting STA transmits a control signal may be understood as a technical feature that the control signal generated in the processor (111, 121) illustrated in the sub-drawings (a)/(b) of FIG. 1 is transmitted through the transceiver (113, 123) illustrated in the sub-drawings (a)/(b) of FIG. 1. Alternatively, the technical feature that the transmitting STA transmits a control signal may be understood as a technical feature that the control signal to be transmitted to the transceiver (113, 123) is generated in the processing chip (114, 124) illustrated in the sub-drawings (b) of FIG. 1.

For example, the technical feature of a receiving STA receiving a control signal can be understood as a technical feature of a control signal being received by a transceiver (113, 123) illustrated in sub-drawing (a) of FIG. 1. Alternatively, the technical feature of a receiving STA receiving a control signal can be understood as a technical feature of a control signal received by a transceiver (113, 123) illustrated in sub-drawing (a) of FIG. 1 being acquired by a processor (111, 121) illustrated in sub-drawing (a) of FIG. 1. Alternatively, the technical feature of a receiving STA receiving a control signal can be understood as a technical feature of a control signal received by a transceiver (113, 123) illustrated in sub-drawing (b) of FIG. 1 being acquired by a processing chip (114, 124) illustrated in sub-drawing (b) of FIG. 1.

Referring to sub-drawing (b) of FIG. 1, software code (115, 125) may be included in the memory (112, 122). The software code (115, 125) may include instructions that control the operation of the processor (111, 121). The software code (115, 125) may be included in various programming languages.

The processor (111, 121) or processing chip (114, 124) illustrated in FIG. 1 may include an application-specific integrated circuit (ASIC), another chipset, logic circuit, and/or data processing device. The processor may be an application processor (AP). For example, the processor (111, 121) or processing chip (114, 124) illustrated in FIG. 1 may include at least one of a digital signal processor (DSP), a central processing unit (CPU), a graphics processing unit (GPU), and a modem (modulator and demodulator). For example, the processors (111, 121) or processing chips (114, 124) illustrated in FIG. 1 may be a SNAPDRAGON^{®} series processor manufactured by Qualcomm^{®}, an EXYNOS^{®} series processor manufactured by Samsung^{®}, an A series processor manufactured by Apple^{®}, a HELIO^{®} series processor manufactured by MediaTek^{®}, an ATOM^{®} series processor manufactured by INTEL^{®}, or an enhanced processor thereof.

In the present specification, "uplink" may refer to a link for communication from a non-AP STA to an AP STA, and uplink PPDUs/packets/signals, etc. may be transmitted via the uplink. Furthermore, in the present specification, "downlink" may refer to a link for communication from an AP STA to a non-AP STA, and downlink PPDUs/packets/signals, etc. may be transmitted via the downlink.

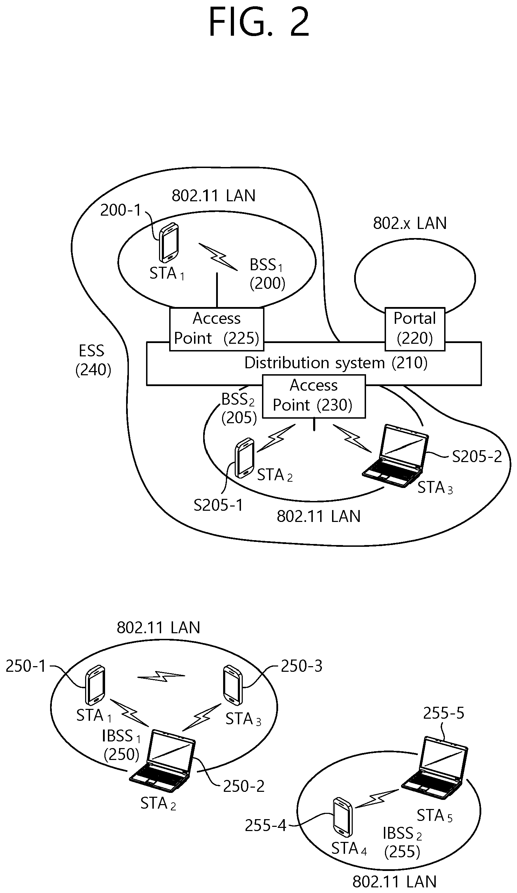

Figure 2 is a conceptual diagram illustrating the structure of a wireless local area network (WLAN).

The top of Figure 2 illustrates the structure of an infrastructure BSS (basic service set) of the Institute of Electrical and Electronic Engineers (IEEE) 802.11 standard.

Referring to the top of Figure 2, the wireless LAN system may include one or more infrastructure BSSs (200, 205) (hereinafter referred to as BSS). A BSS (200, 205) is a set of APs (access points, 225) and STAs (stations, 200-1) that have successfully synchronized and can communicate with each other; it does not refer to a specific area. A BSS (205) may include one or more connectable STAs (205-1, 205-2) connected to a single AP (230).

A BSS may include at least one STA, an AP (225, 230) that provides a distribution service, and a distribution system (DS, 210) that connects multiple APs.

A distributed system (210) can connect multiple BSSs (200, 205) to implement an extended service set (ESS) 240. An ESS (240) can be used as a term to indicate a network formed by connecting one or more APs through the distributed system (210). APs included in a single ESS (240) can have the same SSID (service set identifier).

A portal (220) can serve as a bridge, connecting a wireless LAN network (IEEE 802.11) to another network (e.g., 802.X).

In a BSS, such as the upper portion of FIG. 2, a network between APs (225, 230) and a network between APs (225, 230) and STAs (200-1, 205-1, 205-2) can be implemented. However, it may also be possible to establish a network and perform communication between STAs without an AP (225, 230). A network that establishes a network and performs communication between STAs without an AP (225, 230) is defined as an ad-hoc network or an independent basic service set (IBSS).

The bottom of Figure 2 is a conceptual diagram illustrating an IBSS.

Referring to the bottom of Figure 2, an IBSS is a BSS that operates in ad-hoc mode. Since an IBSS does not include an AP, there is no centralized management entity. That is, in the IBSS, STAs (250-1, 250-2, 250-3, 255-4, 255-5) are managed in a distributed manner. In IBSS, all STAs (250-1, 250-2, 250-3, 255-4, 255-5) can be mobile STAs, and access to distributed systems is not permitted, forming a self-contained network.

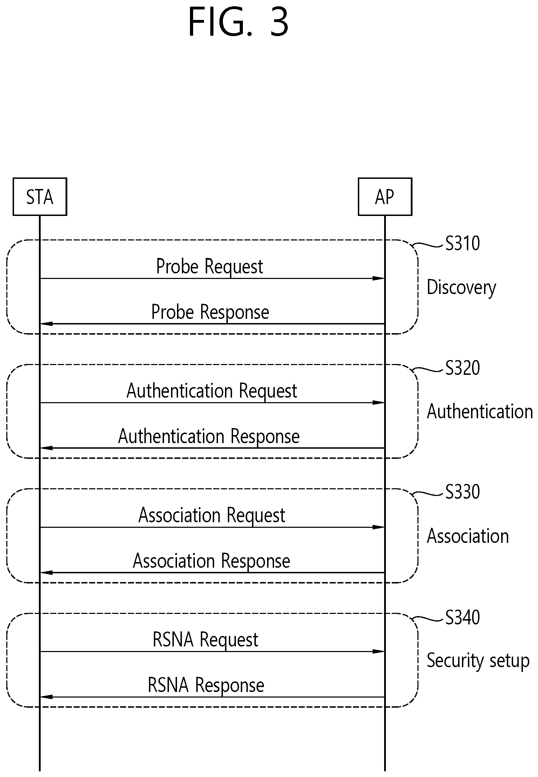

Figure 3 is a diagram illustrating a typical link setup process.

In the illustrated step S310, a STA may perform a network discovery operation. This network discovery operation may include scanning. That is, for a STA to access a network, it must find a network it can join. Before joining a wireless network, a STA must identify compatible networks. The process of identifying networks in a specific area is called scanning. Scanning methods include active scanning and passive scanning.

Figure 3 illustrates a network discovery operation that includes an active scanning process as an example. In active scanning, a STA performing scanning transmits a probe request frame to discover nearby APs while moving through channels and awaits a response. The responder transmits a probe response frame to the STA that transmitted the probe request frame in response to the probe request frame. Here, the responder may be the STA that last transmitted a beacon frame in the BSS of the channel being scanned. In a BSS, the AP transmits the beacon frame, making it the responder. In an IBSS, STAs within the IBSS take turns transmitting beacon frames, so the responder is not fixed. For example, a STA that transmits a probe request frame on channel 1 and receives a probe response frame on channel 1 may store the BSS-related information contained in the received probe response frame and move to the next channel (e.g., channel 2) to perform scanning in the same manner (e.g., transmitting and receiving probe requests and responses on channel 2).

Although not shown in the example of Figure 3, the scanning operation can also be performed passively. A STA performing scanning based on passive scanning may wait for a beacon frame while moving between channels. A beacon frame, a management frame in IEEE 802.11, announces the presence of a wireless network and is periodically transmitted to scanning STAs to discover and join the network. In the BSS, the AP periodically transmits beacon frames, while in the IBSS, STAs within the IBSS take turns transmitting beacon frames. When a scanning STA receives a beacon frame, it stores the BSS information contained in the beacon frame and moves to a different channel, recording the beacon frame information on each channel. Upon receiving a beacon frame, the STA stores the BSS-related information contained in the received beacon frame and moves to the next channel, performing scanning on the next channel using the same method.

A STA that discovers a network can perform an authentication process in step S320. This authentication process can be referred to as the first authentication process to clearly distinguish it from the security setup operation of step S340, described below. The authentication process of S320 may include a process in which the STA transmits an authentication request frame to the AP, and the AP transmits an authentication response frame to the STA in response. The authentication frame used for the authentication request/response corresponds to a management frame.

The authentication frame may include information such as an authentication algorithm number, an authentication transaction sequence number, a status code, a challenge text, a Robust Security Network (RSN), and a Finite Cyclic Group (FCG).

The STA may transmit the authentication request frame to the AP. The AP may determine whether to grant authentication to the STA based on the information contained in the received authentication request frame. The AP may provide the STA with the result of the authentication process via an authentication response frame.

A successfully authenticated STA may perform the connection process based on step S330. The association process involves the STA sending an association request frame to the AP, and the AP responding by sending an association response frame to the STA. For example, the association request frame may include information related to various capabilities, such as a beacon listen interval, a service set identifier (SSID), supported rates, supported channels, RSN, mobility domain, supported operating classes, a Traffic Indication Map Broadcast request, and interworking service capabilities. For example, the association response frame may include information related to various capabilities, status codes, Association ID (AID), supported rates, Enhanced Distributed Channel Access (EDCA) parameter sets, Received Channel Power Indicator (RCPI), Received Signal to Noise Indicator (RSNI), mobility domains, timeout intervals (association comeback times), overlapping BSS scan parameters, TIM broadcast responses, QoS maps, etc.

Subsequently, in step S340, the STA may perform a security setup process. The security setup process in step S340 may include, for example, a process of setting up a private key through four-way handshaking using an Extensible Authentication Protocol over LAN (EAPOL) frame.

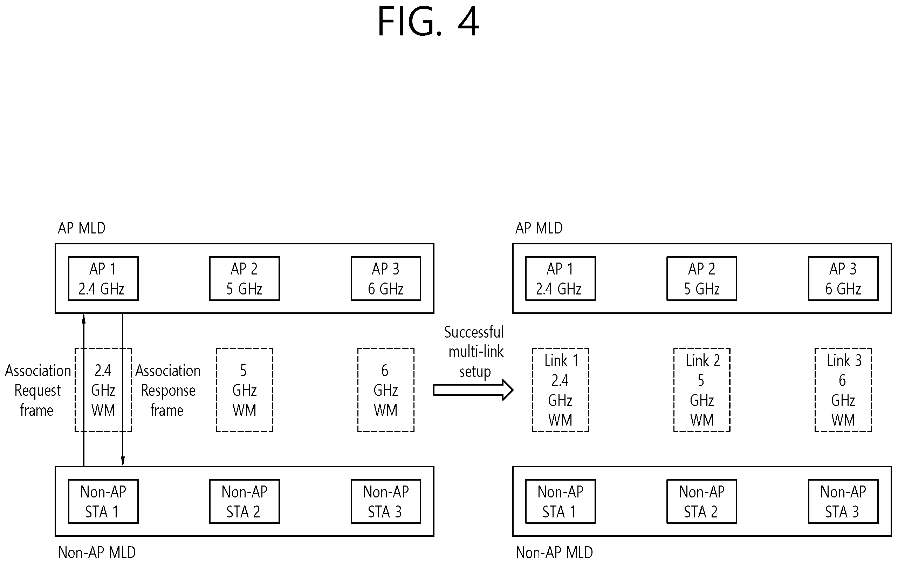

Figure 4 illustrates an embodiment of a multi-link (ML).

As illustrated in Figure 4, multiple multi-link devices (MLDs) can communicate via a multi-link. The MLDs can be categorized into AP MLDs, which include multiple AP STAs, and non-AP MLDs, which include multiple non-AP STAs. Specifically, the AP MLD may include affiliated APs (e.g., AP STAs), and the non-AP MLD may include affiliated STAs (e.g., non-AP STAs, or user-STAs).

The multi-link may include a first link and a second link, and different channels/subchannels/frequency resources may be allocated to the first and second links. The first and second multi-links may be identified using a 4-bit (or other n-bit) link ID. The first and second links may be configured in the same 2.4 GHz, 5 GHz, or 6 GHz band. Alternatively, the first and second links may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link, in which AP1 and non-AP1 operate, may be defined as a channel/subchannel/frequency resource within the 2.4 GHz band. Furthermore, in the example of FIG. 4, the second link, in which AP2 and non-AP2 operate, may be defined as a channel/subchannel/frequency resource within the 5 GHz band. Additionally, in the example of FIG. 4, the third link where AP3 and non-AP3 operate can be defined as a channel/subchannel/frequency resource within the 6 GHz band.

In the example of FIG. 4, AP1 can initiate a multilink setup procedure (ML setup procedure) by transmitting an

Association Request frame to non-AP STA1. In the example of FIG. 4, non-AP STA1 can transmit an Association Response frame in response to the Association Request frame. Each AP (e.g., AP1/2/3) depicted in FIG. 4 may be identical to the APs depicted in FIG. 1 and/or FIG. 2, and each non-AP (e.g., non-AP1/2/3) depicted in FIG. 4 may be identical to the STAs (e.g., user STAs or non-AP STAs) depicted in FIG. 1 and/or FIG. 2.

The specific features of the present specification are not limited to the specific features depicted in FIG. 4. That is, the number of links can be defined in various ways, and multiple links can be defined in various ways within at least one band.

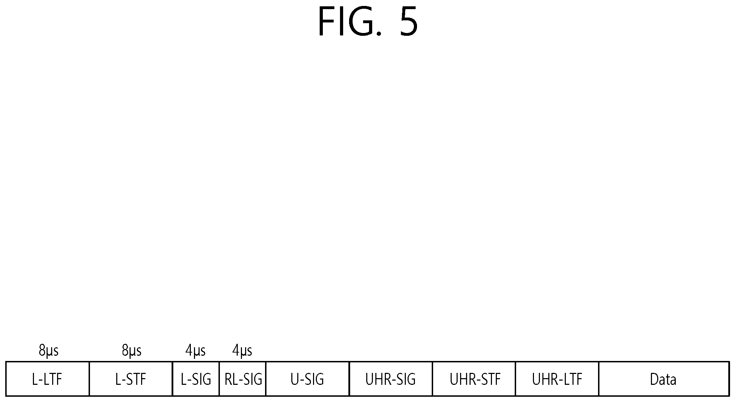

Figure 5 illustrates a PPDU (physical protocol data unit or physical layer (PHY) protocol data unit) transmitted/received by a STA of the present specification.

A STA (e.g., an AP STA, a non-AP STA, an AP MLD, or a non-AP MLD) of the present specification can transmit and/or receive the PPDU of Figure 5. The PPDU described herein may have, for example, the structure of Figure 5. Furthermore, the PPDU described herein, an Ultra High Reliability (UHR) PPDU, may be referred to by various names, such as a transmission PPDU, a reception PPDU, a first type PPDU, or an Nth type PPDU. The PPDU described herein may be used in a WLAN system defined according to IEEE 802.11bn and/or a next-generation WLAN system that enhances IEEE 802.11bn.

The PPDU of Figure 5 may relate to various PPDU types used in a UHR system. For example, the example of FIG. 5 can be used for at least one of single-user (SU) mode/type/transmission, multi-user (MU) mode/type/transmission, and null data packet (NDP) mode/type/transmission related to channel sounding. For example, if the example of FIG. 5 relates to NDP, the illustrated Data field may be omitted. If the PPDU of FIG. 5 is used for Trigger-based (TB) mode, the UHR-SIG of FIG. 5 may be omitted. In other words, a STA that has received a Trigger frame for UL-MU (Uplink-MU) communication may transmit a PPDU with the UHR-SIG omitted in the example of FIG. 5.

In FIG. 5, L-STF or UHR-LTF may be referred to as a preamble or physical preamble, and may be generated/transmitted/received/acquired/decoded in the physical layer (included in the transmitting/receiving STA).

Each block illustrated in FIG. 5 may be referred to as a field/subfield/signal, etc. The names of these fields/subfields/signals may be, as illustrated in FIG. 5, a legacy short training field (L-STF), a legacy long training field (L-LTF), a legacy signal (L-SIG), a repeated L-SIG (RL-SIG), Universal Signal (U-SIG), UHR-signal (UHR-SIG), etc.

The subcarrier spacing of the L-STF, L-LTF, L-SIG, RL-SIG, U-SIG, and UHR-SIG fields in FIG. 5 may be set to 312.5 kHz, and the subcarrier spacing of the UHR-STF, UHR-LTF, and Data fields may be set to 78.125 kHz. That is, the tone indices (or subcarrier indices) of the L-STF, L-LTF, L-SIG, RL-SIG, U-SIG, and UHR-SIG fields may be expressed in units of 312.5 kHz, and the tone indices (or subcarrier indices) of the UHR-STF, UHR-LTF, and Data fields may be expressed in units of 78.125 kHz.

In the PPDU in FIG. 5, L-LTF and L-STF may be identical to conventional fields (e.g., non-HT LTF and non-HT STF defined in conventional WLAN standards).

The L-SIG field of FIG. 5 may include, for example, 24 bits of bit information. For example, the 24 bits of information may include a 4 bit Rate field, a 1 bit Reserved bit, a 12 bit Length field, a 1 bit Parity bit, and a 6 bit Tail bit. For example, the 12 bit Length field may include information about the length or time duration of the PPDU. For example, the value of the 12 bit Length field may be determined based on the type of the PPDU. For example, if the PPDU is a non-HT (non-High Throughput), HT (High Throughput), VHT (Very High Throughput) PPDU, or an EHT (extremely high throughput) PPDU or UHR PPDU, the value of the Length field may be determined as a multiple of 3. For example, if the PPDU is a HE PPDU, the value of the Length field may be determined as "a multiple of 3 + 1" or "a multiple of 3 + 2". In other words, for non-HT, HT, VHT PPDUs, EHT PPDUs, and UHR PPDUs, the Length field value can be determined as a multiple of 3. For HE (High Efficiency) PPDUs, the Length field value can be determined as "a multiple of 3 + 1" or "a multiple of 3 + 2." In other words, the Length field in a UHR PPDU is set to a value satisfying the condition that the remainder is zero when LENGTH is divided by 3.

For example, a (non-AP and AP) STA can apply BCC encoding based on a code rate of 1/2 to the 24-bit information in the L-SIG field. The transmitting STA can then acquire 48 BCC encoding bits. BPSK modulation can be applied to the 48 encoding bits, generating 48 BPSK symbols. The transmitting STA can map 48 BPSK symbols to positions other than the pilot subcarriers {subcarrier indices -21, -7, +7, +21} and the DC subcarrier {subcarrier index 0}. Consequently, the 48 BPSK symbols can be mapped to subcarrier indices -26 to -22, -20 to -8, -6 to -1, +1 to +6, +8 to +20, and +22 to +26. The transmitting STA can additionally map signals {-1, -1, -1, 1} to subcarrier indices {-28, -27, +27, +28}. These signals can be used for channel estimation for the frequency domain corresponding to {-28, -27, +27, +28}.

For example, (non-AP and AP) STAs can generate RL-SIGs that are generated identically to L-SIGs. BPSK modulation can be applied to RL-SIG. The receiving (non-AP and AP) STA can determine whether the received PPDU is a HE PPDU, EHT PPDU, or UHR PPDU based on the presence of RL-SIG. In other words, the receiving (non-AP and AP) STA can determine whether the received PPDU is a HE PPDU, EHT PPDU, or UHR PPDU if RL-SIG is present. In other words, the receiving (non-AP and AP) STA can determine whether the received PPDU is a non-HT PPDU, HT PPDU, or VHT PPDU if RL-SIG is not present. In other words, the RL-SIG field is a repeat of the L-SIG field and is used to differentiate a UHR PPDU from a non-HT PPDU, HT PPDU, and VHT PPDU.

A Universal Signal (U-SIG) may be inserted after the RL-SIG in Figure 5. The U-SIG may be referred to by various names, such as the first SIG field, the first SIG, the first type SIG, the control signal, the control signal field, the first (type) control signal, the common control field, and the common control signal.

The U-SIG may contain N bits of information and may include information for identifying the type of the EHT PPDU. For example, the U-SIG may be composed based on two symbols (e.g., two consecutive/contiguous OFDM symbols). Each symbol for the U-SIG (e.g., the OFDM symbol) may have a duration of 4 µs. Each symbol of the U-SIG may be used to transmit 26 bits of information. For example, each symbol of the U-SIG may be transmitted and received based on 52 data tones and 4 pilot tones.

For example, A bit information (e.g., 52 uncoded bits) can be transmitted through U-SIG, and the first symbol of U-SIG can transmit the first X bits of information (e.g., 26 uncoded bits) out of the total A bit information, and the second symbol of U-SIG can transmit the remaining Y bits of information (e.g., 26 uncoded bits) out of the total A bit information. For example, the transmitting STA can obtain 26 uncoded bits included in each U-SIG symbol. The transmitting STA can perform convolutional encoding (e.g., BCC encoding) based on a rate of R=1/2 to generate 52 coded bits, and perform interleaving on the 52 coded bits. The transmitting STA can perform BPSK modulation on the interleaved 52 BPSK symbols to generate 52 BPSK symbols allocated to each U-SIG symbol. A single U-SIG symbol can be transmitted based on 56 tones (subcarriers) ranging from subcarrier index -28 to subcarrier index +28, excluding DC index 0. The 52 BPSK symbols generated by the transmitting STA can be transmitted based on the remaining tones (subcarriers) excluding the pilot tones - 21, -7, +7, and +21.

For example, the A-bit information (e.g., 52 uncoded bits) transmitted by the U-SIG can include a CRC field (e.g., a 4-bit field) and a tail field (e.g., a 6-bit field). The CRC field and tail field can be transmitted via the second symbol of the U-SIG. The CRC field can be generated based on the 26 bits allocated to the first symbol of the U-SIG and the remaining 16 bits within the second symbol, excluding the CRC/tail field, and can be generated based on a conventional CRC calculation algorithm. Additionally, the tail field can be used to terminate the trellis of the convolutional decoder and can be set to "000000," for example.

The A-bit information (e.g., 52 uncoded bits) transmitted by the U-SIG (or U-SIG field) can be divided into version-independent bits and version-dependent bits. For example, the size of the version-independent bits can be fixed or variable. For example, the version-independent bits can be assigned only to the first symbol of the U-SIG, or the version-independent bits can be assigned to both the first and second symbols of the U-SIG. For example, the version-independent bits and version-dependent bits can be referred to by various names, such as the first control bit and the second control bit.

For example, the version-independent bits of the U-SIG can include a 3-bit PHY version identifier. For example, a 3-bit PHY version identifier may include information related to the PHY version of a transmitted/received PPDU. For example, a first value (e.g., a value of 000) of the 3-bit PHY version identifier may indicate that the transmitted/received PPDU is an EHT PPDU. Additionally, a second value (e.g., a value of 001) of the 3-bit PHY version identifier may indicate that the transmitted/received PPDU is a UHR PPDU.

In other words, when an (AP/non-AP) STA transmits an EHT PPDU, it may set the 3-bit PHY version identifier to the first value. In other words, a receiving (AP/non-AP) STA may determine that the received PPDU is an EHT PPDU based on a PHY version identifier having the first value, and may determine that the received PPDU is a UHR PPDU based on a PHY version identifier having the second value.

For example, the version-independent bits of U-SIG may include a 1-bit UL/DL flag field. The first value of the 1-bit UL/DL flag field relates to UL communication, and the second value of the UL/DL flag field relates to DL communication.

For example, the version-independent bits of the U-SIG may include information about the length of the TXOP and information about the BSS color ID.

For example, if the UHR PPDU is classified into various types (e.g., a type related to SU transmission (performed based on UL or DL), a type related to DL transmission, a type related to NDP transmission, a type related to DL non-MU-MIMO, a type related to DL MU-MIMO, a type related to Multi-AP operation, a type related to CBF (Coordinated beamforming), SR (Spatial Reuse), a type related to C-OFDMA (Coordinated OFDMA), a type related to C-TDMA (Coordinated TDMA)), information about the type of the EHT PPDU (e.g., 2-bit or 3-bit information) may be included in the version-dependent bits of the U-SIG.

For example, U-SIG may include 1) a bandwidth field including information about bandwidth, 2) a field including information about the Modulation and Coding Scheme (MCS) technique applied to UHR-SIG, 3) an indication field including information about whether dual subcarrier modulation (DCM) technique is applied to UHR-SIG, 4) a field including information about the number of symbols used for UHR-SIG, 5) a field including information about whether UHR-SIG is generated across the entire band, 6) a field including information about the type of UHR-LTF/STF, and 7) a field indicating the length of UHR-LTF and the CP length.

Preamble puncturing may be applied to the PPDU of FIG. 5. Preamble puncturing means applying puncturing to a portion of the entire band of the PPDU (e.g., the secondary 20 MHz band). For example, when an 80 MHz PPDU is transmitted, the STA can apply puncturing to the secondary 20 MHz band within the 80 MHz band and transmit the PPDU only through the primary 20 MHz band and the secondary 40 MHz band.

For example, the preamble puncturing pattern can be preset. For example, if the first puncturing pattern is applied, puncturing can be applied only to the secondary 20 MHz band within the 80 MHz band. For example, if the second puncturing pattern is applied, puncturing can be applied only to one of the two secondary 20 MHz bands included in the secondary 40 MHz band within the 80 MHz band. For example, if the third puncturing pattern is applied, puncturing can be applied only to the secondary 20 MHz band included in the primary 80 MHz band within the 160 MHz band (or 80+80 MHz band). For example, when the fourth puncturing pattern is applied, puncturing may be applied to at least one 20 MHz channel not included in the primary 40 MHz band, while the primary 40 MHz band is present within the 160 MHz band (or the 80+80 MHz band).

Information related to preamble puncturing applied to a PPDU may be included in the U-SIG and/or UHR-SIG. For example, the first field of the U-SIG may include information related to the contiguous bandwidth of the PPDU, and the second field of the U-SIG may include information related to preamble puncturing applied to the PPDU.

For example, the U-SIG and UHR-SIG may include information related to preamble puncturing based on the following method. If the bandwidth of the PPDU exceeds 80 MHz, the U-SIG may be configured individually in 80 MHz units. For example, if the bandwidth of a PPDU is 160 MHz, the PPDU may include a first U-SIG for a first 80 MHz band and a second U-SIG for a second 80 MHz band. In this case, a first field of the first U-SIG may include information about the 160 MHz bandwidth, and a second field of the first U-SIG may include information about preamble puncturing applied to the first 80 MHz band (e.g., information about a preamble puncturing pattern). In addition, a first field of the second U-SIG may include information about the 160 MHz bandwidth, and a second field of the second U-SIG may include information about preamble puncturing applied to the second 80 MHz band (e.g., information about a preamble puncturing pattern). Meanwhile, the UHR-SIG contiguous to the first U-SIG may include information about preamble puncturing applied to the second 80 MHz band (e.g., information about a preamble puncturing pattern), and the UHR-SIG contiguous to the second U-SIG may include information about preamble puncturing applied to the first 80 MHz band (e.g., information about a preamble puncturing pattern).

Additionally or alternatively, the U-SIG and UHR-SIG may include information related to preamble puncturing based on the following methods. The U-SIG may include information related to preamble puncturing for all bands (e.g., information related to the preamble puncturing pattern). That is, the UHR-SIG does not include information related to preamble puncturing, and only the U-SIG may include information related to preamble puncturing (e.g., information related to the preamble puncturing pattern).

The U-SIG may be configured in 20 MHz units. For example, if an 80 MHz PPDU is configured, the U-SIG may be duplicated. That is, four identical U-SIGs may be included within the 80 MHz PPDU. PPDUs exceeding the 80 MHz bandwidth may include different U-SIGs.

The UHR-SIG of FIG. 5 may include control information for a receiving STA. The UHR-SIG may be transmitted over at least one symbol, each symbol having a length of 4 µs. Information related to the number of symbols used for the UHR-SIG may be included in the U-SIG.

The UHR-SIG provides additional signals to the U-SIG field to enable the STA to interpret/decode the UHR PPDU. The UHR-SIG field may include U-SIG overflow bits common to all users. The UHR-SIG field also includes resource allocation information, allowing the STA to look up resources used in fields including the data field, UHR-STF, and UHR-LTF (e.g., UHR modulated fields of a UHR PPDU).

The frequency resources of the UHR-LTF, UHR-STF, and data fields illustrated in Figure 5 can be determined based on resource units (RUs) defined by multiple subcarriers/tones. That is, the UHR-LTF, UHR-STF, and data fields of the present specification can be transmitted/received via resource units (RUs) defined by multiple subcarriers/tones.

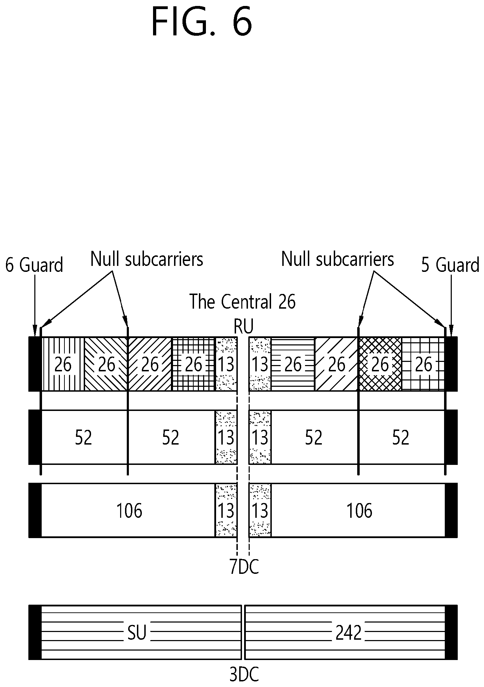

Figure 6 is a diagram illustrating the layout of resource units (RUs) used for a 20MHz PPDU. That is, the UHR-LTF, UHR-STF, and/or data fields included in a 20MHz PPDU can be transmitted/received via at least one of the various RUs defined in Figure 6.

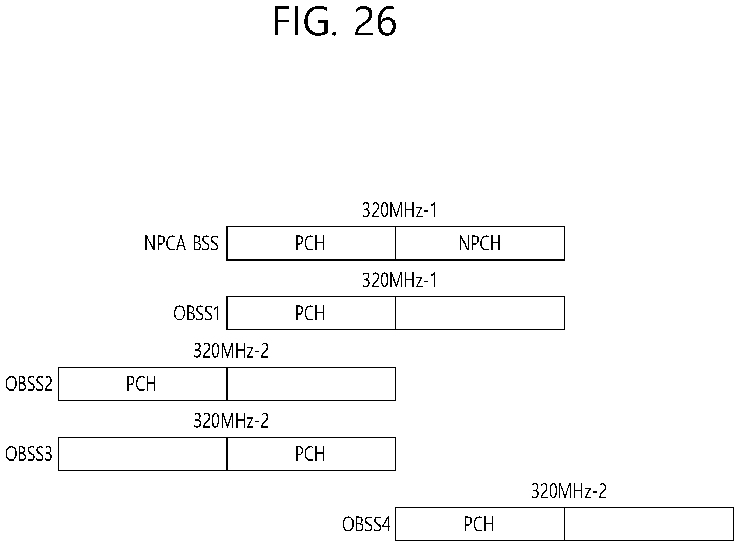

As illustrated at the top of Figure 6, 26 units (e.g., units corresponding to 26 tones) can be arranged. In the leftmost band of the 20 MHz band, six tones can be used as a guard band, and in the rightmost band of the 20 MHz band, five tones can be used as a guard band. Furthermore, seven DC tones can be inserted into the center band (i.e., the DC band), and 26 units, corresponding to 13 tones each, can exist on the left and right sides of the DC band. Furthermore, 26, 52, and 106 units can be allocated to other bands. Each unit can be assigned to a receiving station, i.e., a user.

Meanwhile, the RU arrangement of Figure 6 can be utilized not only for multiple users (MUs) but also for single users (SUs). In this case, as shown at the bottom of Figure 6, a single 242-unit can be used, in which case three DC tones can be inserted.

In the example of Fig. 6, RUs of various sizes, such as 26-RU, 52-RU, 106-RU, and 242-RU, are proposed. Since the specific sizes of these RUs can be expanded or increased, the present embodiment is not limited to the specific sizes of each RU (e.g., the number of corresponding tones). In the present specification, N-RU may be represented as N-tone RU, etc. For example, 26-RU may be represented as 26-tone RU.

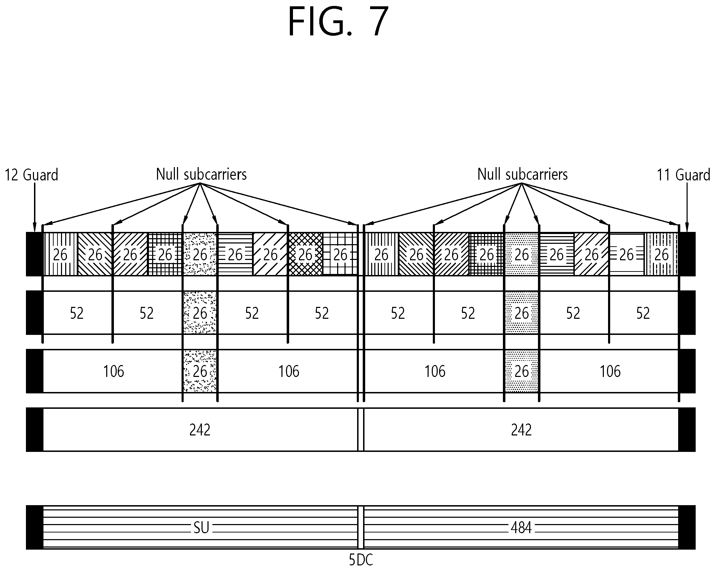

Figure 7 is a diagram illustrating the layout of resource units (RUs) used for a 40MHz PPDU.

Similar to the example in Figure 6, which used RUs of various sizes, the example in Figure 7 can also use RUs of 26, 52, 106, 242, and 484 RUs. Furthermore, five DC tones can be inserted at the center frequency, 12 tones can be used as guard bands in the leftmost band of the 40MHz band, and 11 tones can be used as guard bands in the rightmost band of the 40MHz band.

Also, as illustrated, a 484-RU can be used for a single user. Similarly to the example in Figure 6, the specific number of RUs can be varied.

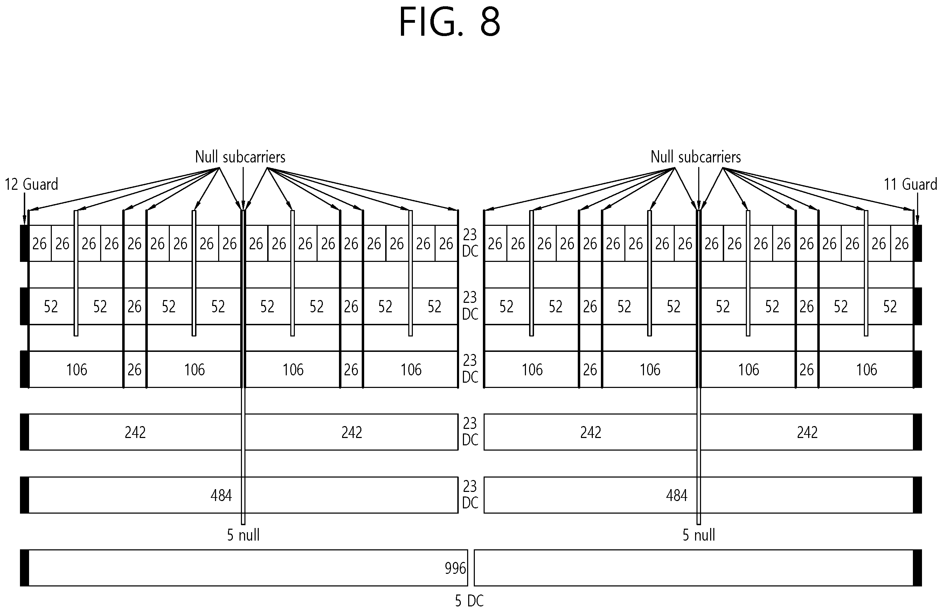

Figure 8 is a diagram illustrating the layout of resource units (RUs) used for an 80MHz PPDU. The arrangement of resource units (RUs) used in the present specification may vary. For example, the arrangement of resource units (RUs) used in the 80 MHz band may vary.

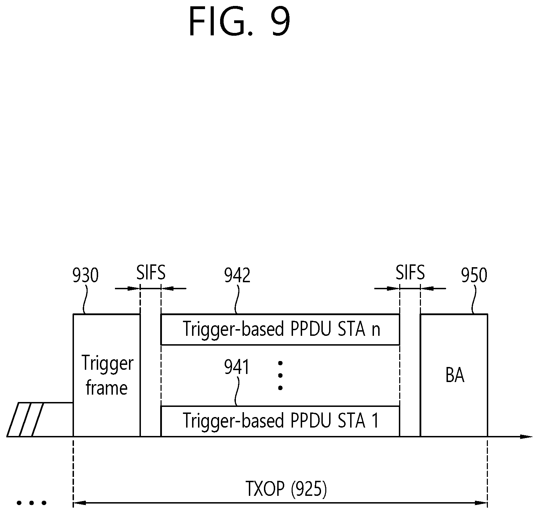

Figure 9 illustrates the operation according to UL-MU. As illustrated, a transmitting STA (e.g., an AP) may acquire a TXOP (925) by performing channel access through contending (e.g., backoff operation) and transmit a Trigger frame (930). That is, the transmitting STA (e.g., an AP) may transmit a PPDU including the Trigger frame (930). Upon receiving the PPDU including the Trigger frame, a TB (trigger-based) PPDU is transmitted after a delay equal to SIFS.

TB PPDUs (941, 942) are transmitted at the same time and may be transmitted from multiple STAs (e.g., user STAs) whose AIDs are indicated in the Trigger frame (930). The ACK frame (950) for the TB PPDU can be implemented in various forms. For example, the ACK frame (950) for the TB PPDU can be implemented in the form of a BA (block ACK).

In FIG. 9, transmission(s) of the Trigger Frame (930), TB PPDUs (941, 942), and/or the ACK frame (950) can be performed within the TXOP (925).

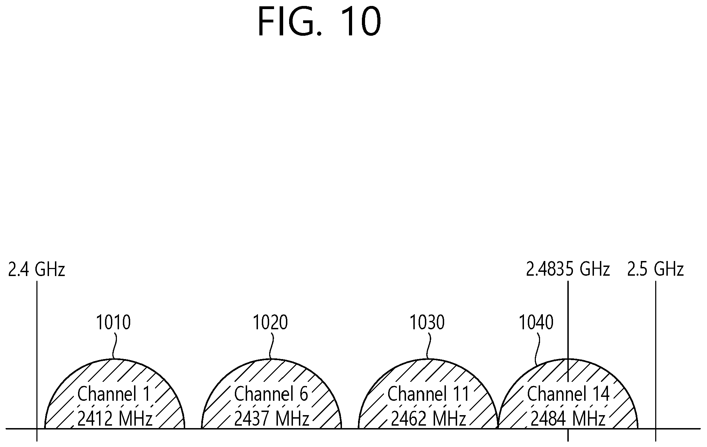

FIG. 10 illustrates an example of channels used/supported/defined within the 2.4 GHz band.

The 2.4 GHz band may also be referred to by other names, such as the first band (band). Furthermore, the 2.4 GHz band may refer to a frequency region in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz channel within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. Channel indices may be referred to by various names, such as channel numbers. The specific numerical values of the channel indices and center frequencies may vary.

Figure 10 illustrates four channels within the 2.4 GHz band. The illustrated first frequency region (1010) through fourth frequency region (1040) may each include one channel. For example, the first frequency domain (1010) may include channel 1 (a 20 MHz channel having an index of 1). At this time, the center frequency of channel 1 may be set to 2412 MHz. The second frequency domain (1020) may include channel 6. At this time, the center frequency of channel 6 may be set to 2437 MHz. The third frequency domain (1030) may include channel 11. At this time, the center frequency of channel 11 may be set to 2462 MHz. The fourth frequency domain (1040) may include channel 14. At this time, the center frequency of channel 14 may be set to 2484 MHz.

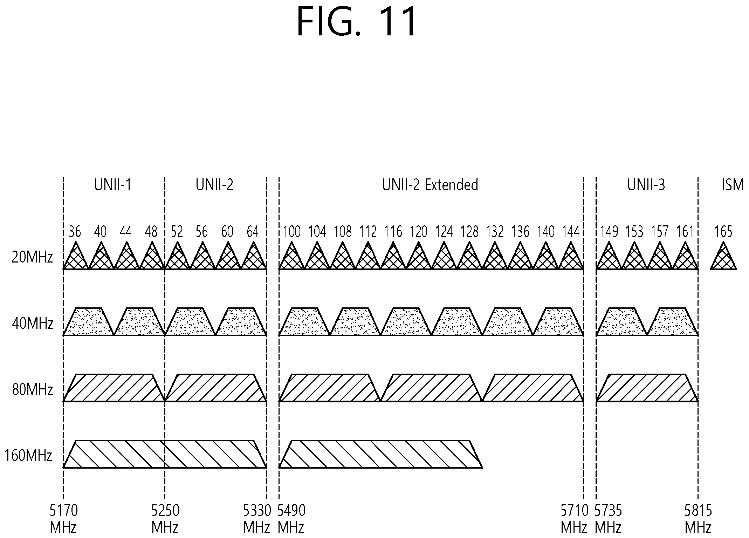

Figure 11 illustrates an example of channels used/supported/defined within the 5 GHz band.

The 5 GHz band may also be referred to as a second band, etc. The 5 GHz band may refer to a frequency region in which channels with a center frequency greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in Figure 11 are subject to change.

The multiple channels within the 5 GHz band include Unlicensed National Information Infrastructure (UNII)-1, UNII-2, UNII-3, and ISM. UNII-1 may be referred to as UNII Low. UNII-2 may include frequency regions called UNII Mid and UNII-2 Extended. UNII-3 may be referred to as UNII-Upper.

Multiple channels can be configured within the 5 GHz band, and the bandwidth of each channel can be variously configured, such as 20 MHz, 40 MHz, 80 MHz, or 160 MHz. For example, the 5170 MHz to 5330 MHz frequency region within UNII-1 and UNII-2 can be divided into eight 20 MHz channels. The 5170 MHz to 5330 MHz frequency region can be divided into four channels via a 40 MHz frequency band. The 5170 MHz to 5330 MHz frequency region can be divided into two channels via an 80 MHz frequency band. Alternatively, the 5170 MHz to 5330 MHz frequency region can be divided into one channel via a 160 MHz frequency band.

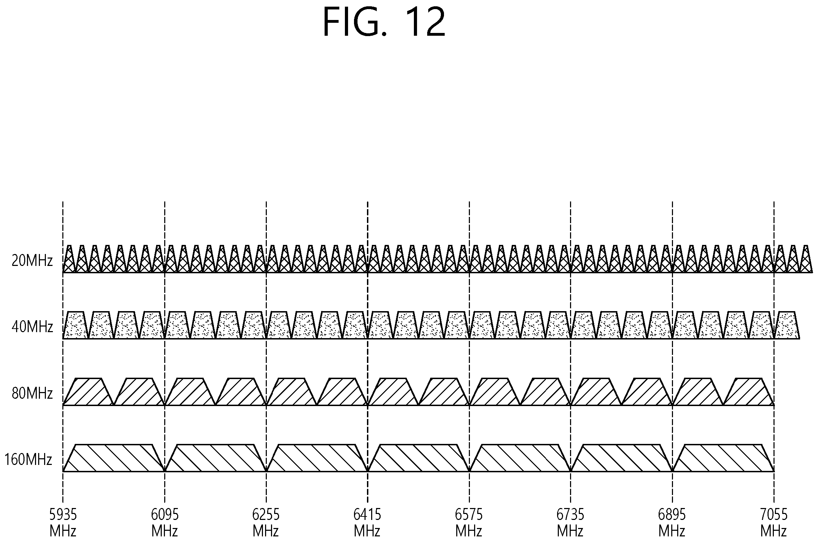

Figure 12 illustrates an example of channels used/supported/defined within the 6 GHz band.

The 6 GHz band may be referred to by other names, such as the third band/band. The 6 GHz band may refer to a frequency region where channels with a center frequency of 5.9 GHz or higher are used, supported, or defined. The specific values shown in Figure 12 may vary.

For example, the 20 MHz channel in Figure 12 may be defined starting from 5.940 GHz. Specifically, the leftmost channel among the 20 MHz channels in Figure 12 may have an index of 1 (or channel index, channel number, etc.) and may be assigned a center frequency of 5.945 GHz. In other words, the center frequency of channel index N may be determined as (5.940 + 0.005*N) GHz.

Accordingly, the indices (or channel numbers) of the 20 MHz channels in Figure 12 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Additionally, according to the aforementioned (5.940 + 0.005*N) GHz rule, the indices of the 40 MHz channels in Figure 12 can be 3, 11, 19, 27, 35, 43, 51, 59, 67, 75, 83, 91, 99, 107, 115, 123, 131, 139, 147, 155, 163, 171, 179, 187, 195, 203, 211, 219, and 227.

Hereinafter, the structure, type and/or sub-type of the MAC frame are described.

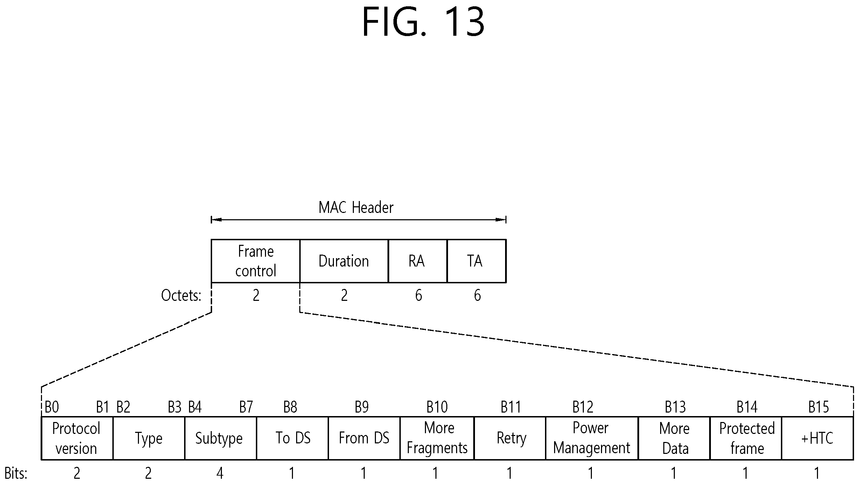

Figure 13 illustrates an example of a MAC frame header. As illustrated, the MAC frame may include a 2-octet frame control field/information, a 2-octet duration field/information, a 6-octet RA (Receiver Address) field/information, and a 6-octet TA (Transmitter Address) field/information. As illustrated in Figure 13, the four fields may be contiguous. The MAC header of Figure 13 may be modified in various ways, with new fields inserted between the four fields illustrated, or at least one of the fields illustrated may be omitted.

The MAC header illustrated in Figure 13 may be positioned at the very beginning of the MAC frame. That is, the MAC frame may include a MAC header as illustrated in Figure 13 and a MAC body field/information contiguous to the MAC header. The MAC frame including the MAC header of Figure 13 is inserted/included in the data field of the PPDU (e.g., UHR PPDU) illustrated in Figure 5.

The MAC frames included in the data field of the PPDU of the present specification can be classified into various types. For example, the MAC frames of the present specification can be classified into control frames, management frames, and data frames.

For example, the management frame includes the Association Request, Association Response, Reassociation Request, Reassociation Response, Probe Request, Probe Response, Beacon, Disassociation, Authentication, and Deauthentication frames/signals defined in conventional WLANs. For the management frame, the type fields (B3 and B2) in FIG. 13 are set to 00. Additionally, the values of the subtype fields (B7, B6, B5, B4) in Figure 13 are as follows: Association Request (0000), Association Response (0001), Reassociation Request (0010), Reassociation Response (0011), Probe Request (0100), Probe Response (0101), Beacon (1000), Disassociation (1010), Authentication (1011), Deauthentication (1100).

For example, the control frame includes the Trigger Beamforming Report Poll, NDP Announcement (NDPA), Control Frame Extension, Control Wrapper, Block Ack Request (BlockAckReq), Block Ack (BlockAck), PS-Poll, RTS, CTS, Ack, and CF-End frames/signals defined in conventional WLANs. For the control frame, the values of the type fields (B3 and B2) in Figure 13 are set to 01. Additionally, the values of the subtype fields (B7, B6, B5, B4) in FIG. 13 are as follows: Trigger (0010), Beamforming Report Poll (0100), NDP Announcement (0101), Control Frame Extension (0110), Control Wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc., as defined in conventional WLANs. For the data frame, the values of the type fields (B3 and B2) in FIG. 13 are set to 10.

The MAC frames/signals used in the present specification can be identified through the type field/information and subtype field/information described above. For example, a "trigger frame" in the present specification may refer to a MAC frame in which the type bits B3 and B2 in the frame control field of the MAC header are set to 01, while the subtype bits B7, B6, B5, and B4 in the frame control field are set to 0010. The various MAC frames described in the present specification are inserted/included in the data fields of various PPDUs (e.g., HE/VHT/HE/EHT/UHR PPDUs).

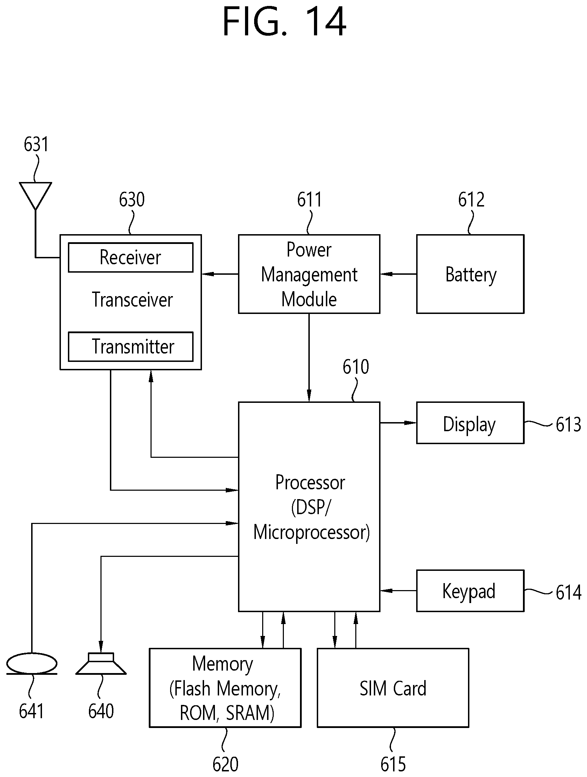

Figure 14 illustrates a modified example of a transmitting device and/or receiving device of the present specification.

The devices (e.g., AP STAs, non-AP STAs) illustrated in Figures 1 to 4 may be modified as illustrated in Figure 14. The transceiver (630) in Figure 14 may be identical to the transceivers (113, 123) in Figure 1. The transceiver (630) of FIG. 14 may include a receiver and a transmitter.

The processor (610) of FIG. 14 may be identical to the processors (111, 121) of FIG. 1. Alternatively, the processor (610) of FIG. 14 may be identical to the processing chip (114, 124) of FIG. 1.

The memory (150) of FIG. 14 may be identical to the memory (112, 122) of FIG. 1. Alternatively, the memory (150) of FIG. 14 may be a separate external memory different from the memory (112, 122) of FIG. 1.

Referring to FIG. 14, the power management module (611) manages power for the processor (610) and/or the transceiver (630). The battery (612) supplies power to the power management module (611). The display (613) outputs the results processed by the processor (610). The keypad (614) receives input to be used by the processor (610). The keypad (614) may be displayed on the display (613). The SIM card (615) may be an integrated circuit used to securely store an international mobile subscriber identity (IMSI) and associated keys, which are used to identify and authenticate subscribers in mobile devices such as mobile phones and computers.

Referring to FIG. 14, the speaker (640) may output sound-related results processed by the processor (610). The microphone (641) may receive sound-related input to be used by the processor (610).

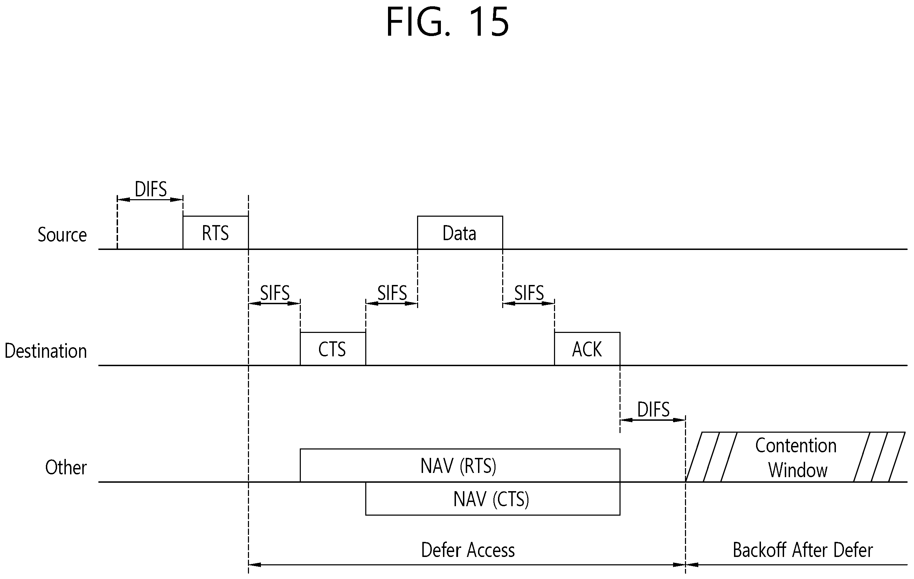

Figure 15 illustrates an example of NAV (network allocation vector) setting. The example of Figure 15 relates to the exchange of an RTS (Ready To Send) frame and a CTS (Clear To Send) frame. Figure 15 relates to an example in which a NAV is set based on RTS/CTS exchange.

Referring to Figure 15, a Source STA transmits an RTS frame, and a Destination transmits a CTS frame. As described above, a destination STA designated as a receiver through the RTS frame does not set a NAV. Some of the remaining STAs may receive the RTS frame and set a NAV, and some others may receive the CTS frame and set a NAV.

If a CTS frame (e.g., a PHY-RXSTART.indication primitive) is not received within a certain period from the time point at which the RTS frame is received (e.g., the time point at which the MAC receives the PHY-RXEND.indication primitive corresponding to the RTS frame), the STAs that set or updated the NAV through the RTS frame may reset (e.g., to 0) the NAV. The certain period may be (2*aSIFSTime + CTS_Time + aRxPHYStartDelay + 2*aSlotTime). The CTS_Time may be calculated based on the length and data rate of the CTS frame indicated by the RTS frame.

Although Figure 15 illustrates setting or updating a NAV through an RTS frame or a CTS frame for convenience, the NAV setting/resetting/updating may be performed based on a duration field (e.g., a duration field in a MAC header of a MAC frame) included in one PPDU based on various other frames, for example, a non-HT PPDU, an HT PPDU, a VHT PPDU, an HE PPDU, an EHT PPDU, and/or a UHR PPDU. For example, if the RA field in a received MAC frame does not match its own address (e.g., a MAC address), the STA may set/reset/update the NAV.

The Source STA of Figure 15 may be variously modified. For example, the Source STA of Figure 15 may be a non-AP STA or an AP. Additionally or alternatively, the Source STA of Figure 15 may be at least one non-AP STA included in a non-AP MLD, or at least one AP included in an AP MLD. Additionally or alternatively, the Source STA of Figure 15 may be various STAs such as STA 1, STA 2, AP 1, and AP 2 described below.

Hereinafter, a primary channel, a secondary channel, channel extension/bonding, and the like are described.

For example, in an IEEE 802.11n system, two 20 MHz channels may be combined to perform 40 MHz channel extension/bonding. In addition, in an IEEE 802.11ac system, 40/80/160 MHz channel extension/bonding may be performed.

For example, a STA may perform channel extension/bonding on a Primary 20 MHz channel (or P20 channel) and a Secondary 20 MHz channel (S20 channel). For channel extension/bonding, a back-off count/counter may be used. A back-off count value is selected as a random value and may be decreased during a back-off interval. In general, when the back-off count value becomes 0, a STA (e.g., a non-AP STA or an AP) may attempt access to a channel.

A STA performing channel extension/bonding determines, at the time point when the P20 channel is determined to be in the Idle state during the back-off interval and the back-off count value for the P20 channel becomes 0, whether the S20 channel has maintained the Idle state for a certain period (e.g., PIFS (point coordination function interframe space)). If the S20 channel is in the Idle state, the STA may perform bonding on the P20 channel and the S20 channel. That is, the STA may transmit a signal (e.g., a PPDU) through a 40 MHz channel (i.e., a 40 MHz bonding channel) including the P20 channel and the S20 channel.

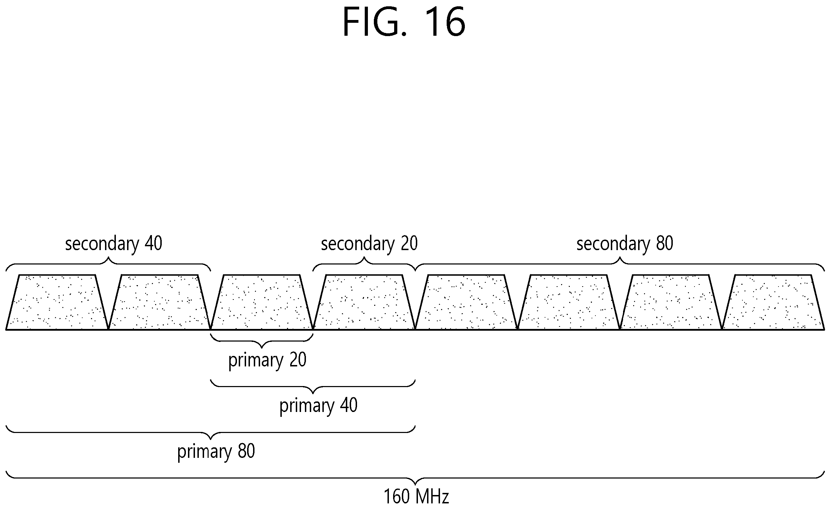

Figure 16 illustrates an example related to a primary channel, a secondary channel, and channel extension/bonding. As illustrated in Figure 16, a Primary 20 MHz channel and a Secondary 20 MHz channel may constitute a 40 MHz channel (a Primary 40 MHz channel) through channel extension/bonding. That is, the extended/bonded 40 MHz channel may include the Primary 20 MHz channel and the Secondary 20 MHz channel.

The positions of the channels illustrated in Figure 16 (e.g., the P20/S20/S40/S80 channels), i.e., the positions in the frequency domain, may be variously modified.

According to the prior art, channel extension/bonding may be performed when a channel that follows the Primary channel is in the Idle state. That is, a Primary 20 MHz channel (or P20 channel), a Secondary 20 MHz channel (or S20 channel), a Secondary 40 MHz channel (or S40 channel), and a Secondary 80 MHz channel (or S40 channel) may be sequentially extended/bonded, and if the Secondary 20 MHz channel (or S20 channel) is determined to be in the Busy state, channel extension/bonding may not be performed even if all other Secondary channels are in the Idle state. In addition, when the Secondary 20 MHz channel (or S20 channel) is in the Idle state and the Secondary 40 MHz channel is determined to be in the Busy state, channel extension/bonding may be performed only on the Primary 20 MHz channel (or P20 channel) and the Secondary 20 MHz channel (or S20 channel).

For example, in a wireless LAN system (e.g., an 802.11 system), Channel Access may be performed based on a Primary channel (e.g., a P20 channel). For example, as described above, when the Primary channel (e.g., the P20 channel) is IDLE and the Back-off counter (BC) becomes 0, a STA may transmit a frame (e.g., a 40 MHz PPDU) including an IDLE Secondary channel (e.g., an S20 channel). For this, it is preferable that all STAs perform CCA on the primary channel (e.g., the P20 channel).

Accordingly, the AP may announce the Primary channel (e.g., the P20 channel) of the BSS. For example, information related to the Primary channel may always be included in a Management frame such as a Beacon or a Probe Response frame transmitted by the AP. Such a mechanism is effective for frame exchange between all STAs and the AP to be performed without interference (or for appropriate medium protection). However, when only the primary channel (e.g., the P20 channel) is BUSY and a surrounding secondary channel is IDLE, the STA can perform Access on the secondary channel in the IDLE state. Accordingly, there exists a technical feature that efficiency may be reduced in terms of medium use.

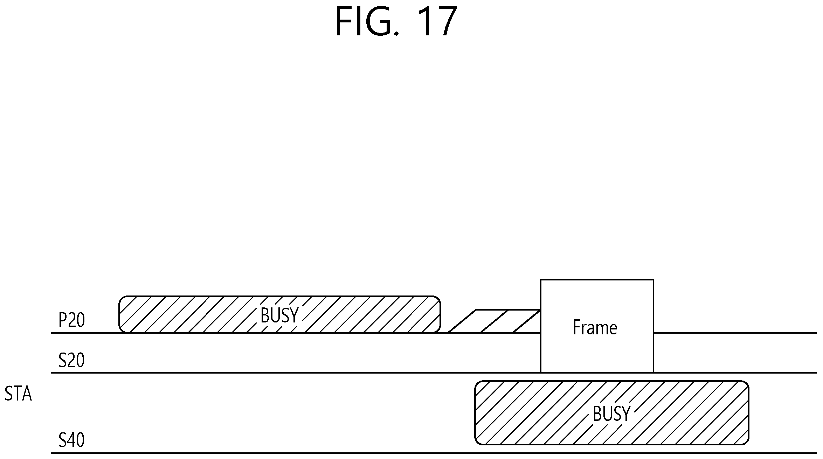

Figure 17 relates to an example of channel access related to an 80 MHz channel. For example, Figure 17 relates to channel access based on a Primary channel defined on a wireless medium having an 80 MHz Bandwidth. The three channels/subchannels illustrated in Figure 17 are denoted by P20, S20, S40, and the like, and related terms may be described as follows.
P20: Primary 20MHz Channel
S20: Secondary 20MHz Channel
S40: Secondary 40MHz Channel
S80: Secondary 80MHz Channel
S160: Secondary 160MHz Channel

The above-described P20, S20, S40, S80, and S160 may correspond to the respective channels/subchannels illustrated in Figure 16.

For example, when the CCA result for P20 (channel) is determined to be in the BUSY state, or when a NAV (described in Figure 15) is set for P20 and it is determined to be in the BUSY state, the BC for P20 is not decreased. In this case, the BC may not be decreased until P20 becomes in the IDLE state. When the BC becomes 0 through such a Back-off process (e.g., a process of decreasing the BC), the STA may check (e.g., check based on a CCA technique) the channel state of S20 (channel) and S40 (channel). In addition, the corresponding STA may transmit a frame through an extended channel/resource according to the check result. In the example of Figure 17, since S40 (channel) is BUSY, a frame corresponding to a 40 MHz PPDU is transmitted through P20 and S20. In other words, the example of Figure 17 relates to an example in which a 40 MHz channel including the P20 channel and the S20 channel is configured through the above-described channel extension/bonding.

As in the example of Figure 17, when P20 is determined to be in the BUSY state and S20 and S40 are determined to be in the IDLE state, a STA operating according to a conventional Access technique wastes a Bandwidth corresponding to 60 MHz. Accordingly, the efficiency of medium use is reduced. An example of the present specification proposes various techniques/methods/apparatuses for improving this. For example, an example of the present specification proposes various techniques/methods/apparatuses by which access to a Secondary channel (or Non-Primary Channel) is possible even when P20 is BUSY.

It is preferable that the following various examples are applied to a STA of a wireless LAN system. For example, the following STA (or STA1 to STA#N, etc.) may be at least one non-AP STA (included in a non-AP MLD) or at least one AP (included in an AP MLD).

The present specification relates to an operation of performing Access to a Secondary Channel (e.g., S20). Access to a Secondary Channel may be expressed as SCA (Secondary Channel Access). When SCA is started/performed/triggered, the STA switches to a Secondary Channel (e.g., S20) and thereafter may perform CCA sensing (and/or Backoff counter decrease) on the switched Secondary Channel.

The term SCA may be variously modified. For example, SCA may have the same meaning as NPCA (Non-Primary Channel Access). For example, in the following examples, the term SCA may be replaced with the term NPCA. For example, in the following examples, the expression SCA mode may be replaced with the expression NPCA mode. In addition, in the following examples, the term SCA enabled presence may be replaced with the term NPCA enabled presence.

Additionally or alternatively, the term Secondary Channel may be variously modified. For example, since a main operation related to SCA/NPCA is performed by a STA (e.g., by an AP/non-AP STA) on the previously described Secondary 20MHz channel, it may also be called by the name NPCA primary channel (or NPCH).

Hereinafter, information related to Capabilities for Secondary Channel Access is described.

For example, Capabilities for SCA (or NPCA) may be defined/exchanged/negotiated in advance. For example, a non-AP STA and an AP may inform each other of the defined/exchanged/negotiated information. For example, Capabilities for SCA (or NPCA) may relate to CCA (e.g., an operation based on conventional preamble detection (PD)) capable of identifying a Wi-Fi frame performed on a Primary channel (e.g., the above-described P20 channel). For example, as in the following specific examples, Capabilities for SCA (or NPCA) may include information regarding whether a frame can be decoded on an SCH (or an S20 channel or an NPCA primary channel or an NPCH). Through such Capabilities for SCA/NPCA, additional NAV(s) (e.g., at least one Intra-BSS NAV and/or Basic NAV) may also be set on an SCH (or an NPCA primary channel or an NPCH).

For example, Capabilities for SCA (or NPCA) may be configured based on 2-bit information. For example, Level 0/1/2 as below may be identified through a first/second/third value of the 2-bit information. The length of the 2-bit information may be variously modified. Accordingly, the 2-bit information may also be configured through 3/4/5 bits, and the like. All of Level 0/1/2 below need not be used, and at least one may be selectively used.

Three specific levels of the above-described Capabilities for SCA (or NPCA) are described as follows.

Level 0: For example, the Level 0 may mean "No Back-off on SCH." For example, when the level is set, the conventional CCA may be performed (by the STA) on the SCH. In this case, CCA capable of detecting that it is a Wi-Fi signal (e.g., referred to as guard interval detection (GID)), and/or CCA detecting a signal of a certain strength or higher (e.g., referred to as energy detection (ED)), and the like may be performed.

Level 1: For example, the Level 1 may mean "Back-off on a SCH at a time." For example, when the level is set, PD may be performed on only one secondary channel at a time.

Level 2: For example, the Level 2 may mean "Back-off on SCHs at the same time." For example, when the level is set, PD may be performed on several secondary channels at the same time.

For example, the above-described Capabilities may be included in a UHR capabilities IE, and the like, and included in various management frames such as a Beacon, a Probe Response frame, and a (Re)Association Request frame generated/transmitted by an AP. Additionally or alternatively, the above-described Capabilities may be included in various management frames such as a Probe Request frame and a (Re)Association Request frame generated/transmitted by a non-AP STA.

The NAV described in Figure 15 may be distinguished into an Intra-BSS NAV and a Basic NAV. An Intra-BSS NAV may be a NAV set by an Intra-BSS frame/PPDU, and a Basic NAV may be a NAV set by an OBSS (overlapping BSS) frame/PPDU.

For example, if an Intra-BSS NAV for the PCH is set by a STA (e.g., a non-AP STA or an AP), the STA may not perform SCA (or NPCA). For example, when an AP performs frame exchange with any one STA (e.g., a Non-AP STA) within a TXOP obtained/acquired by the AP, another STA may thereby set an intra-BSS NAV based on the primary channel. At this time, the STA that has set the intra-BSS NAV may transmit a frame to the AP after accessing the SCH, and in this case, if the corresponding AP was performing Tx (e.g., DL Data, Ack, etc.), the corresponding AP does not receive the related signal. Accordingly, it is preferable that the STA starts/triggers SCA only when a Basic NAV is set on the PCH.

The above technical feature may be expressed in various ways. For example, the above technical feature may also be expressed as that a STA (e.g., a non-AP STA or an AP) can perform SCA when a Basic NAV is set on the PCH.

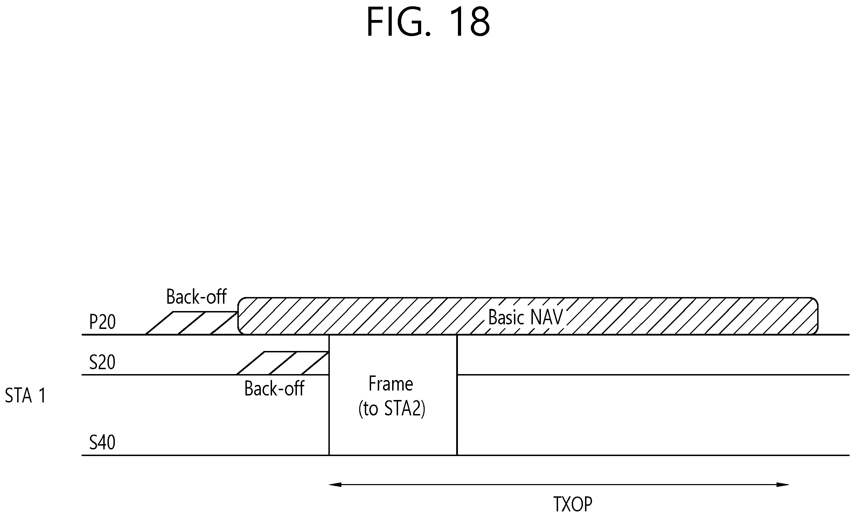

Figure 18 illustrates an example of an SCA process. The example of Figure 18 (e.g., an SCA/NPCA operation) may be performed by STA1 (e.g., an AP or a non-AP STA). As illustrated, if a Basic NAV is set while performing back-off on the P20 channel, Back-off may be performed on the S20 channel (or the NPCA primary channel or the NPCH) at the time point when the corresponding Basic NAV is set. In this case, Back-off may be performed on the S20 channel (or the NPCA primary channel) not immediately after the time point when the Basic NAV is set, but after a delay from the time point when the Basic NAV is set. For example, a Switching delay for performing PD from the P20 channel to the S20 channel may occur. The above example differs in the CCA method from the viewpoint that CCA can be performed on the S20 channel, and may be performed in all levels. The reason why Back-off is performed on the S20 channel (or the NPCA primary channel) is that, if a surrounding STA having the same or similar Operation channel as STA 1 does not perform Back-off and is IDLE, it may transmit a frame at the same time, and in this case, a collision may occur and rather waste the channel.

SCA/NPCA may be performed based on the following technical features.

First, an example of transmitting a Frame on a secondary channel (e.g., at least one channel including an NPCA primary channel (or NPCH)) is described.

Conventionally, only when the P20 channel was determined to be IDLE, Preamble Puncturing could be performed according to the IDLE/BUSY determination of at least one SCH channel. For the SCA/NPCA of the present specification, since a situation where the P20 channel is BUSY is considered, the rule for this can be changed as follows. For example, if the P20 channel is determined to be BUSY, the corresponding P20 channel may be Punctured, and other BUSY SCH(s) based on the S20 channel may also be punctured, and as a result, a frame may be transmitted through IDLE SCH(s). For example, in the example of Figure 18, a total of three 20 MHz channels included in the S20 channel and the S40 channel are all determined to be IDLE. Accordingly, STA1 may perform Preamble Puncturing on the P20 channel of the 80 MHz PPDU while transmitting the 80 MHz PPDU (including a MAC Frame). That is, information indicating the puncturing of the P20 channel may be included in the U-SIG field, etc., of the corresponding 80 MHz PPDU.

Second, an example of setting a TXOP on a secondary channel (or an NPCA primary channel or an NPCH) is as follows.

For example, when the Basic NAV on the P20 channel expires, CCA may need to be performed on the P20 channel. Accordingly, it is preferable that the end time of a TXOP for a secondary channel (e.g., an S20 channel or an NPCA primary channel or an NPCH) is set to end before the time when the Basic NAV on the Primary channel (e.g., the P20 channel) expires.

Additionally or alternatively, if there is not enough time to set the TXOP of the secondary channel, a Frame may not be transmitted (on the secondary channel).

For example, if the end time of the TXOP of the secondary channel is set to end after the time when the Basic NAV (of the Primary channel) expires, since a Legacy STA, etc., may transmit a frame through the P20 channel, a problem may arise in that STA1 of Figure 18 does not receive it. In addition, if the TBTT is set in the middle of the Basic NAV, a problem may arise because STA1 of Figure 18 must prepare to transmit a Beacon immediately after the Basic NAV.

In order to efficiently perform SCA/NPCA, the above-described technical features must be further improved. For example, it is preferable that the time point at which SCA/NPCA is performed, or the time point at which switching to an SCH (or an NPCA primary channel or an NPCH) is performed in order to perform SCA/NPCA, is optimized.

For example, starting switching to an SCH (or an NPCA primary channel or an NPCH) in order to perform SCA/NPCA may be related to triggering an SCA/NPCA (operation). For example, triggering an SCA/NPCA (operation) may mean switching to an SCH (or an NPCA primary channel) or accessing the corresponding channel. Additionally or alternatively, triggering an SCA/NPCA (operation) may mean determining whether to switch to an SCH (or an NPCA primary channel) (or whether to access the corresponding channel). Additionally or alternatively, triggering an SCA/NPCA (operation) may mean switching to an SCH (or an NPCA primary channel) after acquiring/obtaining control information for switching to the SCH (or the NPCA primary channel) (e.g., acquiring/obtaining information related to an OBSS PPDU). For example, switching to an SCH (or an NPCA primary channel) may mean performing a procedure prior to receiving a signal (e.g., CCA/ED/PD) on the SCH (or the NPCA primary channel) after completing an operation on the PCH.

The present specification describes various triggering conditions for an SCA/NPCA (operation). When the various triggering conditions proposed in the present specification are satisfied, the corresponding STA (e.g., an AP or a non-AP STA) may start/attempt switching to the above-described SCH (or NPCA primary channel or NPCH). When the various triggering conditions proposed in the present specification are not satisfied, the corresponding STA (e.g., an AP or a non-AP STA) cannot start/attempt switching to the above-described SCH (or NPCA primary channel).

The NPCA triggering condition proposed in the present specification may be determined according to 1) the version (or type) of an OBSS PPDU (or received traffic) received by the STA and/or 2) a predetermined or negotiated rule. For example, the NPCA triggering condition may vary according to which version (or type) of OBSS PPDU is received by the STA. Additionally or alternatively, the NPCA triggering condition may vary according to a predetermined or negotiated rule.

It is preferable that the above-described NPCA triggering condition (e.g., a condition/timing for switching to a channel related to NPCA, a condition/timing for accessing the corresponding channel) is optimized in consideration of various situations. Improving the NPCA triggering condition may be related to the performance of NPCA/SCA as follows.

For example, for higher performance of NPCA/SCA, it is preferable that a STA performing NPCA/SCA switches to an NPCA primary channel (e.g., an S20 channel or an NPCH) at the earliest time point after acquiring information by which NPCA/SCA can be performed. Additionally or alternatively, it is preferable that several SCAs switch to an NPCA primary channel (e.g., an S20 channel) at the same time as much as possible. For example, when switching is performed/started rapidly, a STA performing NPCA/SCA may acquire/set a longer TXOP on the NPCA primary channel (e.g., the S20 channel). In addition, for example, when switching is performed/started at the closest or the same time as much as possible, unnecessary FE (Frame Exchange) initiating on the NPCA primary channel (e.g., the S20 channel) can be prevented.

In other words, when the NPCA triggering condition (e.g., a time point/operation of switching to an NPCA primary channel (e.g., an S20 channel or an NPCH), or a start/operation of accessing the corresponding channel) is improved, various technical effects may occur.

For example, at which time point switching to an NPCA primary channel (e.g., an S20 channel or an NPCH) is performed, or at which time point NPCA is triggered, may be defined differently according to the version/type of a PPDU (e.g., an OBSS PPDU). For example, in order to perform NPCA/SCA, at least one STA (e.g., an AP or a non-AP STA) may 1) determine whether received traffic is an OBSS PPDU or an intra-BSS PPDU, and 2) acquire information regarding how long to perform NPCA/SCA (e.g., TXOP information or PPDU Length information). Additionally or alternatively, the corresponding STA may 3) determine whether an SCH on which back-off is performed (e.g., an NPCA primary channel or an NPCH or an S20 channel) overlaps with OBSS traffic (e.g., an OBSS PPDU received on the PCH). This is because, for example, when the channel/subchannel/frequency resource on which the OBSS traffic is received overlaps with the SCH (or NPCH, S20 channel, etc.), it may be meaningless for the STA to switch to the corresponding SCH and perform SCA (or NPCA). For example, according to the PPDU version/type (Non-HT, HT, VHT, HE, EHT, or UHR PPDU), the time point at which the above-described information can be acquired may vary. In addition, for example, performing/starting switching (or triggering NPCA) at the earliest time point (and at the closest or the same time as much as possible) after acquiring the above-described information may affect the performance of NPCA/SCA.

For example, a STA (e.g., an AP) may announce information regarding a) whether information necessary for NPCA/SCA is provided based on a PHY Header (e.g., a PHY preamble included in an OBSS PPDU), and b) whether information for NPCA/SCA is provided based on a MAC Header (e.g., a MAC Header included in an OBSS PPDU). Additionally or alternatively, the corresponding STA may announce c) information regarding whether to set the duration for which NPCA/SCA can be performed based on a TXOP or based on a PPDU Length. Additionally or alternatively, since the corresponding STA cannot perform sufficient FE (Frame Exchange) even if it performs NPCA/SCA when the TXOP or PPDU length is too short, the corresponding STA may announce information related to a Threshold value (e.g., a TXOP Duration Threshold or a PPDU Length Threshold) by which a TXOP can be acquired by performing NPCA/SCA. For example, the STA (e.g., the AP) may include at least one of information elements (IEs) described below for the NPCA/SCA operation. The corresponding information element (IE) may be included in a Management frame including a Beacon and a Probe Response of the STA, within a UHR Operation IE or in the form of a new IE.

Hereinafter, examples of various information elements are described.

First Information Element (IE): PHY/MAC based NPCA
The first information element (IE) may be information indicating whether to acquire information necessary for NPCA/SCA based on a PHY Header (e.g., a PHY preamble of a PPDU received on the PCH) and switch to an SCH channel based on the acquired information, or to acquire information necessary for NPCA/SCA based on a MAC Header (e.g., a MAC header of a MAC frame included in a Data field of a PPDU received on the PCH) and switch to an SCH channel based on the acquired information.

For example, when the first information element (IE) has a length of 1 bit, if it is set to a first value (or a 0 value), information necessary for NPCA/SCA is acquired based on the PHY Header, and if it is set to a second value (or a 1 value), information necessary for NPCA/SCA may be acquired based on the MAC Header. For example, the first information element (IE) may have various bit lengths. For example, if the first information element (IE) has a third value (or a 2 value), information necessary for NPCA/SCA may be acquired based on both the PHY and MAC headers.

For example, when information necessary for NPCA/SCA is obtained based on the PHY Header, there is an advantage that NPCA/SCA can be performed at an earlier time point, so that a longer TXOP can be secured on the SCH. On the other hand, considering that the information necessary for performing NPCA/SCA may be insufficient in the PHY Header depending on the PPDU type, when information necessary for NPCA/SCA is obtained based on the MAC Header, there is an advantage that NPCA/SCA can be performed for more OBSS PPDU types.

For example, when the first information element (IE) is set to the third value (e.g., when PHY/MAC based NPCA is set to 2), the time point at which information necessary for NPCA/SCA can be obtained may vary according to the PPDU format of OBSS traffic. Specifically, the time point at which information necessary for NPCA/SCA can be obtained may be determined together with the second information element (e.g., a TXOP/PPDU based NPCA field) described below. For example, when the second information element (e.g., the TXOP/PPDU based NPCA field) is a first value (e.g., 0) (e.g., in the case of being TXOP based), for a non-HT/HT/VHT OBSS PPDU, NPCA/SCA may be performed after acquiring TXOP information from the MAC header, and for an HE/EHT/UHR OBSS PPDU, NPCA/SCA may be performed after acquiring TXOP information from the PHY header. For example, when the second information element (e.g., the TXOP based NPCA field) is a second value (e.g., 1) (e.g., in the case of being PPDU Length based), for a non-HT/HT OBSS PPDU, NPCA/SCA is performed after confirming the RA/TA address by which it can be determined whether it is an OBSS PPDU from the MAC header. In this case, for a VHT/HE/EHT/UHR OBSS PPDU, it can be determined whether it is an OBSS PPDU based on the BSS color of the PHY header, and NPCA/SCA can be performed.

### Second Information Element (IE): TXOP/PPDU based NPCA

For example, the second information element (IE) may indicate whether the duration for which NPCA/SCA can be performed is set based on a TXOP value or based on a PPDU Length value.

For example, when the second information element (IE) has a length of 1 bit, if the corresponding information element is set to a first value (e.g., 0), the NPCA/SCA duration is set based on a TXOP value, and if it is set to a second value (e.g., 1), the NPCA/SCA duration may be set based on a PPDU Length value.

For example, when TXOP based NPCA is set, there is an advantage that, when performing NPCA/SCA, since a TXOP value generally has a longer value than a PPDU Length, the duration for which NPCA/SCA can be performed becomes longer.

For example, when PPDU Length NPCA is set, there is an advantage that, after performing NPCA/SCA, when returning from the SCH (e.g., the S20 channel) back to the PCH (e.g., the P20 channel), an issue in which medium synchronization is lost on the PCH does not occur.

### Third Information Element (IE): TXOP Duration Threshold

For example, the third information element (IE) may include information regarding a TXOP duration that must be guaranteed at a minimum when the value of the above-described second information element (e.g., TXOP/PPDU based NPCA) is a first value (e.g., 0) (e.g., when performing NPCA/SCA based on a TXOP value). That is, when the TXOP value (e.g., the Basic NAV value) of an OBSS PPDU is smaller than the value set by the third information element, NPCA/SCA may not be performed even if the PCH (e.g., the P20 channel) is BUSY.

For example, the unit of the third information element may be expressed in ms. Additionally or alternatively, when the third information element has a length of 8 bits, for example, a value of 0000 0011 may indicate that the TXOP Duration Threshold is set to 3 ms. In this case, based on the third information element, the STA may perform NPCA/SCA only when the Basic NAV (value) is longer than 3 ms. Additionally or alternatively, the unit of the corresponding field may be us, and the bit length may also be variously changed.

### Fourth Information Element (IE): PPDU Length Threshold:

For example, the fourth information element (IE) may include information regarding a TXOP duration that must be guaranteed at a minimum when the above-described second information element (e.g., TXOP/PPDU based NPCA) is related to a PPDU Length value. For example, when the Length value of an OBSS PPDU is smaller than the value of the fourth information element, the STA may not perform NPCA/SCA even if the PCH (e.g., the P20 channel) is determined to be BUSY. For example, the Length value of a PPDU may be identified/acquired through the LENGTH field of the L-SIG field of the PPDU.

For example, the unit of the fourth information element may be expressed in ms. Additionally or alternatively, when the fourth information element has a length of 8 bits, for example, a value of 0000 0011 may indicate that the PPDU Length Threshold is set to 3 ms. In this case, based on the fourth information element, the STA may perform NPCA/SCA only when the Length of an OBSS PPDU is longer than 3 ms. Additionally or alternatively, the unit of the corresponding field may be us, and the bit length may also be variously changed.

At least one of the above-described first to fourth information elements relates to a condition for triggering NPCA (or a condition for switching/accessing an NPCA primary channel (or an NPCH)). In other words, in order for NPCA to be triggered (or in order to perform switching/accessing an NPCA primary channel), a condition related to at least one of the first to fourth information elements must be satisfied (e.g., a condition that the OBSS PPDU length is greater than the fourth information element is satisfied, or a condition that the TXOP value of the OBSS PPDU is greater than the third information element is satisfied).

The condition for triggering NPCA (or the condition for switching/accessing an NPCA primary channel (or an NPCH)) may be based on the Version/type of a PPDU as described above. For example, the Version/type of a PPDU may be one of a non-HT (non-High Throughput) PPDU (Physical Protocol Data Unit), an HT (High Throughput) PPDU, a VHT (Very High Throughput) PPDU, an HE (High Efficiency) PPDU, an EHT (Extremely High Throughput) PPDU, and a UHR (Ultra High Reliability) PPDU. Additionally or alternatively, the Version/type of a PPDU may be related to whether the corresponding PPDU includes an RTS or an MU-RTS. Additionally or alternatively, the Version/type of a PPDU may be related to whether the corresponding PPDU is a non-HT PPDU including an RTS or an MU-RTS.

Specific technical features related to the Version/type of a PPDU are as follows.

### First Version/Type PPDU (e.g., RTS in Non-HT PPDU)

For example, when a PPDU received by a STA (e.g., an AP or a non-AP STA) (e.g., an OBSS PPDU received on the PCH) is a non-HT PPDU including an RTS or an MU-RTS, the following matters may be considered.

In other words, the first version/type PPDU may be a PPDU including an RTS or an MU-RTS (e.g., a Non-HT PPDU or a Non-HT Duplicate PPDU). When the first version/type PPDU is received on the PCH, the condition for triggering NPCA (or the condition for switching/accessing an NPCA primary channel (or an NPCH)) is determined in consideration of the following matters.

Information necessary for performing NPCA/SCA may be insufficient in the PHY header of the Non-HT PPDU. Accordingly, duration information for which NPCA/SCA can be performed and information regarding whether it is OBSS traffic may be acquired through the MAC Header of the corresponding non-HT PPDU.

In a conventional wireless LAN system, when a NAV is set due to an RTS or an MU-RTS, if PPDU detection (e.g., detection of a PHY-RXEARLYSIG.indication or PHY-RXSTART.indication primitive) is not received during a certain time (hereinafter referred to as NAVWaitTime or "NAV wait time"), the NAV set due to the corresponding RTS or MU-RTS may be reset (e.g., set to 0). The above-described NAVWaitTime may be calculated as (2 × aSIFSTime) + (CTS_Time) + aRxPHYStartDelay + (2 × aSlotTime), and CTS_Time may be calculated according to the length and PHY data rate for a CTS frame. The above-described aSIFSTime, CTS_Time, aRxPHYStartDelay, and aSlotTime are parameter values widely known in wireless LAN technology, where aSIFSTime may have a value corresponding to the length of SIFS (Short IFS), and CTS_Time may have a value corresponding to the length of a CTS frame corresponding to the RTS/MU-RTS. In addition, for example, aRxPHYStartDelay is an integer delay value determined according to the related PPDU version, where each delay, in microseconds, is from the start of the PPDU at the receiver's antenna to the issuance of earlier of the PHYRXEARLYSIG.indication if sent or the PHY-RXSTART.indication primitive. In addition, for example, aSlotTime may be a slot time, in microseconds, used by the MAC layer of a wireless LAN device to define an IFS.

For example, for a STA (e.g., a non-AP/AP) that switches to an SCH (e.g., an S20 channel or an NPCA primary channel or an NPCH) due to an RTS (or MU-RTS) received from an OBSS (e.g., an OBSS PPDU on the PCH) and performs NPCA/SCA, the following issue may occur when the NAV set by the corresponding RTS (or MU-RTS) is reset. For example, the cases where the NAV must be reset are as follows. For example, when a) the related CTS is not received due to a failure of RTS transmission (or MU-RTS transmission), or b) the RTS transmission (or MU-RTS transmission) is successful but a failure occurs in the transmission/reception of the CTS corresponding to the RTS, the corresponding NAV must be reset.

In the situation described above, the following issue may occur.

When a Basic NAV is set due to an RTS or an MU-RTS on an OBSS (e.g., an OBSS PPDU on the PCH), but PPDU detection (e.g., detection of a PHY-RXEARLYSIG.indication or PHY-RXSTART.indication primitive) cannot be performed during a certain time (e.g., the above-described NAVWaitTime), the Basic NAV must be reset (e.g., set to 0). However, since the STA (e.g., an AP/non-AP) that set the Basic NAV has already switched to the SCH, it may not know about the reset of the Basic NAV. As a result, when a STA (e.g., an AP and a non-AP) performing NPCA/SCA returns to the PCH, there may exist an issue of losing medium synchronization. In addition, for example, since a legacy STA (e.g., an existing STA before 11bn or an existing STA before UHR) that reset the Basic NAV may transmit a frame based on the PCH, there may exist an issue in which a frame collision occurs.

In order to solve the above issue, the STA of the present specification may perform the following operation. For example, when a Basic NAV is set due to an RTS (or MU-RTS) (received on the PCH), it is preferable that the STA (e.g., an AP/non-AP) does not switch to the SCH and perform NPCA/SCA immediately after the Basic NAV is set. In other words, NPCA may not be triggered immediately after the Basic NAV is set. Instead, the STA of the present specification may wait for up to the NAVWaitTime (e.g., wait for up to the NAVWaitTime from the time point at which the Basic NAV is set). When PPDU detection occurs during the NAVWaitTime (e.g., when a Data frame is detected on the PCH, or a CTS frame is detected on the PCH), it may be determined that a Basic NAV that is not reset has been set, and the STA may switch to the SCH (or access the SCH or trigger NPCA).

Additionally or alternatively, when the STA does not detect any PPDU (on the PCH) while waiting for up to the NAVWaitTime, it is also possible for the STA not to switch to the SCH, to reset (e.g., set to 0) the Basic NAV on the PCH, and to proceed with the Back-off procedure on the PCH.

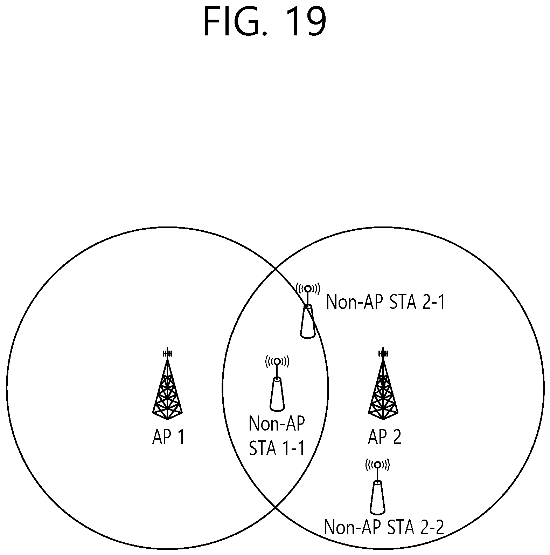

Figure 19 is an example of a network topology related to an example of the present specification.

As illustrated in Figure 19, when Non-AP STA 1-1 transmits an RTS to AP 1, Non-AP STA 2-1, Non-AP STA 2-2, and AP2, which can overhear the frame of Non-AP STA 1-1, may set a Basic NAV due to the RTS. In this case, the STA that set the Basic NAV may wait during the NAVWaitTime without switching to the SCH immediately. For example, if PPDU detection is confirmed during the NAVWaitTime, the Basic NAV will not be reset, and the corresponding STA may switch to the SCH.

With reference to Figure 19, technical features applicable to individual STAs are described by being divided into Case 1 and Case 2.

### Case 1:

The operation of a STA (e.g., an AP/non-AP) operating based on Case 1 may be as follows.

For example, the cases where an OBSS PPDU can be received and a switch to the SCH can be performed immediately are as follows. For example, Non-AP STA 2-1, Non-AP STA 2-2, and AP 2 may receive the RTS transmitted by Non-AP STA 1-1 and immediately switch to the SCH to perform NPCA/SCA. The corresponding case has an advantage that the STAs performing NPCA/SCA can take a TXOP on the SCH for a longer time. Additionally or alternatively, the OBSS PPDU may be an RTS or an MU-RTS.

In other words, a STA operating based on Case 1 may receive an OBSS PPDU received on the PCH, and when the corresponding OBSS PPDU includes an RTS (or MU-RTS), set a Basic NAV for the PCH and perform a switch to an NPCA primary channel (or an NPCH) immediately at the time point when the Basic NAV starts (or perform NPCA triggering immediately).

### Case 2:

Hereinafter, Case 2 is described. The technical features of Case 2 are described based on Case 2-1 and Case 2. A STA operating based on Case 2 may detect a PPDU on the PCH while waiting for a certain time without switching to the SCH immediately after the Basic NAV is set. If PPDU detection is confirmed on the PCH during waiting, based on the confirmation of the PPDU detection, the corresponding STA may switch to the SCH to perform NPCA/SCA.

### Case 2-1:

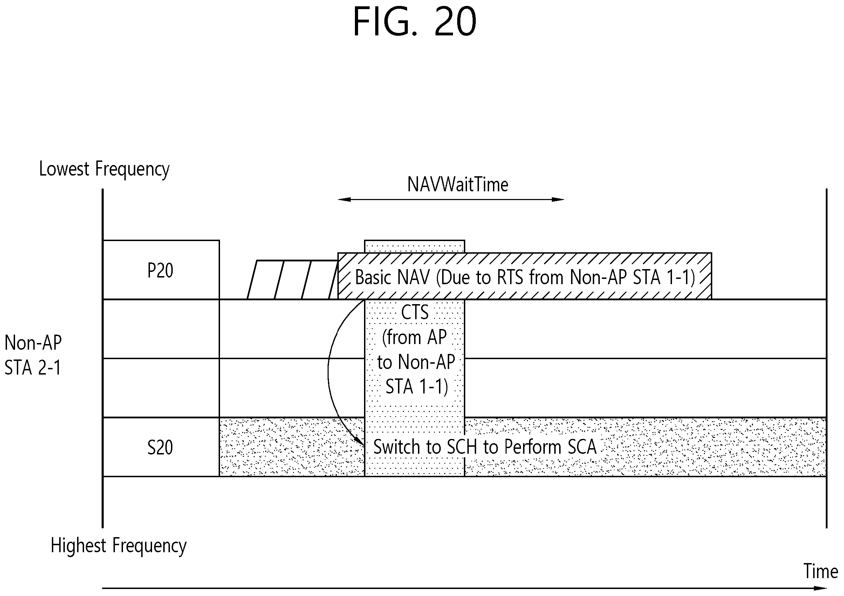

Figure 20 illustrates an example related to Case 2-1. For example, a STA (e.g., non-AP STA 2-1 of Figure 20) may receive a response frame for an OBSS PPDU (e.g., the CTS from AP 1 to Non-AP STA 1-1 of Figure 20). The STA may perform a switch to the SCH based on the corresponding Response received on the PCH. For example, since Non-AP STA 2-1 of Figure 20 is included within the overhearing range for a PPDU transmitted by AP 1, if AP 1 transmits a response for the OBSS PPDU within the NAVWaitTime, Non-AP STA 2-1 can detect it. For example, when PPDU detection is determined, Non-AP STA 2-1 may switch to the SCH. Additionally or alternatively, the response frame for the OBSS PPDU may be a CTS.

The example of Figure 20 may be expressed differently as follows. A STA (e.g., Non-AP STA 2-1) may receive an OBSS PPDU through a primary channel (e.g., a P20 channel). For example, the OBSS PPDU may include an RTS (or MU-RTS). When the received OBSS PPDU includes an RTS (or MU-RTS), a) the corresponding STA sets a Basic NAV for the primary channel, b) may not perform a switch to an NPCA primary channel (or an NPCH) immediately at the time point when the Basic NAV starts (or perform NPCA triggering immediately), and c) may defer the switch to the SCH (or NPCA triggering) for the above-described NAVWaitTime. For example, if PPDU detection (e.g., a CTS) is confirmed during the NAVWaitTime, the STA may perform a switch to the NPCA primary channel immediately at the time point when the PPDU detection is confirmed (or perform NPCA triggering immediately), even during the NAVWaitTime.

### Case 2-2:

The above-described Case 2-1 is an example in which, when a response frame (e.g., a CTS) for an OBSS PPDU is confirmed, a switch to an NPCA primary channel (or an NPCH) is performed (or NPCA triggering is performed immediately), whereas Case 2-2 relates to an example in which, when a frame received after the response frame (e.g., a Data frame) is confirmed, a switch to an NPCA primary channel is performed (or NPCA triggering is performed immediately).

For example, AP 2 and Non-AP STA 2-2 of Figure 19 may not receive a response for an OBSS PPDU transmitted by AP1. In this case, AP 2 and Non-AP STA 2-2 may, within the NAVWaitTime, detect a frame after the response frame for the OBSS PPDU when Non-AP STA 1-1 transmits it, and switch to the SCH. Additionally or alternatively, the frame after the response frame for the OBSS PPDU may be a data frame.

The above Case 2-2 may be expressed differently as follows.

A STA (e.g., AP2 or Non-AP STA 2-2) may receive an OBSS PPDU through a primary channel (e.g., a P20 channel). For example, the OBSS PPDU may include an RTS (or MU-RTS). When the received OBSS PPDU includes an RTS (or MU-RTS), a) the corresponding STA sets a Basic NAV for the primary channel, b) may not perform a switch to an NPCA primary channel (or an NPCH) immediately at the time point when the Basic NAV starts (or perform NPCA triggering immediately), and c) may defer the switch to the SCH (or NPCA triggering) for the above-described NAVWaitTime. For example, even if a response frame (e.g., a CTS) of the OBSS is not received during the NAVWaitTime, if a frame after the response frame of the corresponding OBSS (e.g., a Data frame related to the RTS) is confirmed, the STA may perform a switch to the NPCA primary channel immediately at the time point when the corresponding frame (e.g., the Data frame related to the RTS) is confirmed (or perform NPCA triggering immediately), even during the NAVWaitTime.

Case 2, including the above-described Case 2-1 and Case 2-2, may perform a switch to the SCH (e.g., the S20 channel or the NPCA primary channel or the NPCH illustrated in Figure 20) after confirming that the Basic NAV set on the PCH is not reset. As a result, there is an advantage that the corresponding STA may not lose medium synchronization on the PCH when it returns to the PCH after performing NPCA/SCA.

In the above-described Case 2, there is an issue that must be additionally considered. For example, depending on the network topology, the time point at which a Non-AP STA and an AP switch to the SCH may vary, as in Case 2-1) and Case 2-2). In that case, a Non-AP STA that switched to the SCH first may attempt a meaningless Frame exchange to a Non-AP STA that has not switched, and resources may thereby be wasted. Accordingly, a method may be proposed by which STAs (e.g., a Non-AP and an AP) can switch at the same time point (or by which, even if one party switches first, a frame exchange can be started when it can be guaranteed that the receiving STA has switched to the SCH). Such a method may be embodied through the following Method-1, Method-2, and Method-3.

### Method-1)

According to Method-1, even after all STAs receive an RTS (or MU-RTS) and then receive a responding frame (e.g., a CTS) for the RTS (or MU-RTS), they may not switch to the SCH immediately. In this case, the STA may wait until receiving a frame after the corresponding responding frame (e.g., a Data frame related to the RTS), and switch to the SCH when the corresponding frame (e.g., the Data frame) is received. In this case, the transmitting STA can transmit a frame considering only the channel switch delay that occurs when the receiving STA switches to the SCH. Such Method-1) can guarantee that the receiving STA has completed the switch to the SCH.

### Method-2)

A STA that receives a responding frame (e.g., a CTS) for an RTS (or MU-RTS) and performs a switch may proceed with back-off in consideration of a preset time (T), for a STA that receives a frame after the Responding frame (e.g., a Data frame related to the RTS) and switches. In this case, when the value of the T is greater than the back-off counter value, the corresponding STA may wait for the T-backoff counter value and then start a frame exchange. Additionally or alternatively, the T may be set to the value of CTS_TIME + aSIFSTime + aRxPHYStartDelay + Diff(channel switch delay). For example, the Diff (channel switch delay) may have a value of 0 when the channel switch delay of the STA on the transmitting side is greater. In addition, for example, the Diff may have a value obtained by subtracting the value of the transmitting-side channel switch delay from the value of the receiving-side STA's channel switch delay when the channel switch delay of the STA on the receiving side is greater.

### Method-3)

STAs whose Basic NAV set due to an RTS (or MU RTS) is not reset during the NAVTimeout (i.e., the above-described NAVWaitTime) may start a switch to the SCH after the NAVTimeout.

### Second Version/Type PPDU (Non-HT PPDU without RTS)

The above-described second version/type PPDU may be a non-HT (or non-HT duplicate PPDU) that does not include an RTS (or MU-RTS). When the second version/type PPDU is received on the PCH, the condition for triggering NPCA (or the condition for switching/accessing an NPCA primary channel (or an NPCH)) is determined in consideration of the following matters.

When the received PPDU is a non-HT PPDU (or non-HT duplicate PPDU) that does not include an RTS (or MU-RTS), the following must be considered. In other words, when the received PPDU is the second version/type PPDU, the following must be considered. First, OBSS PPDU identification must be performed based on the RA/TA address of the MAC header of the received PPDU. For example, when the PHY/MAC based NPCA is a first value (e.g., 0) (e.g., in the case of being PHY header based), NPCA/SCA of a TXOP-based duration may not be performed for a non-HT PPDU that does not include an RTS (or MU-RTS). For example, when the PHY/MAC based NPCA is a second value (e.g., 1) or a third value (e.g., 2), OBSS PPDU identification may be performed based on the RA/TA address of the MAC header of the received PPDU. For example, when the TXOP/PPDU based NPCA field value is a first value (e.g., 0), the STA may identify the Duration field value of the MAC header of the received PPDU, and switch to the SCH after decoding up to the RA/TA of the corresponding MAC header.

Additionally or alternatively, the STA may identify the duration field value of the MAC header of the received PPDU, decode up to the RA/TA of the MAC Header, perform an FCS check to confirm the validation check, and then switch to the SCH.

Additionally or alternatively, when the PHY/MAC based NPCA is 1 or 2 and the TXOP/PPDU based NPCA field value is 1, NPCA/SCA may be performed based on the Length field value of the L-SIG field of the received PPDU. In this case, the STA may decode up to the RA/TA from the MAC header of the received PPDU, and then switch to the SCH.

Additionally or alternatively, the STA may decode up to the RA/TA from the MAC header of the received PPDU, perform an FCS check, and switch to the SCH at the time point when the validation check is completed.

### Third Version/Type PPDU (HT PPDU)

The above-described third version/type PPDU may be an HT PPDU. When the third version/type PPDU is received on the PCH, the condition for triggering NPCA (or the condition for switching/accessing an NPCA primary channel (or an NPCH)) is determined in consideration of the following matters.

When the received PPDU is an HT PPDU, OBSS PPDU identification may be performed based on the RA/TA address of the MAC header of the received PPDU. For example, when the PHY/MAC based NPCA is a first value (e.g., 0) (e.g., in the case of being PHY header based), NPCA/SCA may not be performed for an HT PPDU. Accordingly, when the PHY/MAC based NPCA is a second value (e.g., 1) or a third value (e.g., 2), OBSS PPDU identification may be performed based on the RA/TA address of the MAC header of the received PPDU. In addition, when the TXOP/PPDU based NPCA field value is 0, the STA may identify the Duration field value of the MAC header of the received PPDU, confirm up to the RA/TA of the corresponding MAC header, complete the validation check through an FCS check, and then switch to the SCH.

Additionally or alternatively, the STA may confirm up to the Duration, RA, and TA fields in the MAC header of the received PPDU, omit the validation check through the FCS, and switch to the SCH immediately.

Additionally or alternatively, when an A-MPDU included in an HT PPDU is received, the STA may confirm up to the Duration, RA, and TA information included in the MAC header of the first MPDU, complete the FCS check for the first MPDU, and then switch to the SCH.

In addition, for example, when the TXOP/PPDU based NPCA field value is 1, the STA may perform NPCA/SCA based on the Length field value of the L-SIG field of the received PPDU. In this case, the STA may decode up to the RA/TA from the MAC header of the received PPDU, and then switch to the SCH.

Additionally or alternatively, the STA may decode up to the RA/TA from the MAC header of the received PPDU, and then switch to the SCH after completing the validation check through an FCS check.

Additionally or alternatively, when an A-MPDU included in an HT PPDU is received, the STA may confirm the RA and TA information through the MAC header of the first MPDU, complete the FCS check for the first MPDU, and then switch to the SCH.

### Fourth Version/Type PPDU (in the case of a VHT PPDU)

The above-described fourth version/type PPDU may be a VHT PPDU. When the fourth version/type PPDU is received on the PCH, the condition for triggering NPCA (or the condition for switching/accessing an NPCA primary channel (or an NPCH)) is determined in consideration of the following matters.

When the received PPDU is a VHT PPDU, OBSS PPDU identification may be performed based on the Partial AID and Group ID field values of the VHT-SIG-A field of the PHY header of the received PPDU. When the PHY/MAC based NPCA is a first value (e.g., 0) (e.g., in the case of being a PHY header) and the TXOP/PPDU based NPCA field value is a second value (e.g., 1), OBSS PPDU identification may be performed through the Group ID and Partial AID fields of the VHT-SIG-A field. In this case, after OBSS PPDU identification is performed, the STA immediately switches to the SCH and may perform NPCA/SCA for a PPDU Length based on the LENGTH field of the L-SIG field of the VHT PPDU.

Additionally or alternatively, when the OBSS PPDU received by the STA through the PCH corresponds to the VHT PPDU, the STA may switch to the SCH after completing the validation check through a CRC check of the VHT-SIG-A field of the corresponding VHT PPDU.

In addition, when the TXOP/PPDU based NPCA field is a first value (e.g., 0), OBSS PPDU identification may be performed through the Group ID and Partial AID fields of the VHT-SIG-A field. After OBSS PPDU identification is performed, the STA may decode only up to the duration field of the MAC header of the VHT PPDU, and then immediately switch to the SCH to perform NPCA/SCA.

Additionally or alternatively, when the OBSS PPDU received by the STA through the PCH corresponds to the VHT PPDU, the STA may, after completing the validation check through an FCS check of the MAC header of the corresponding VHT PPDU, perform NPCA/SCA based on the PPDU length of the corresponding VHT PPDU.

Additionally or alternatively, when the second version/type PPDU (e.g., Non-HT without RTS), the third version/type PPDU (e.g., HT PPDU), and/or the fourth version/type PPDU (e.g., VHT PPDU) described above are received, when obtaining information from the MAC header of the received PDU, the STA may decode information from the MAC header from the first MPDU of an A-MPDU included in the corresponding PPDU, and switch to the SCH after the FCS check is completed. Through this, the STA starts switching to the SCH at an earlier time point, and thus can acquire a longer TXOP on the SCH.

Additionally or alternatively, the processing delay that occurs in decoding the MAC header of the received PPDU (or a delay such as the delay that occurs in performing the FCS check) may vary according to the capability of the STAs. That is, the time point at which switching is started may change for each STA. Considering this, it can be ensured that the STAs (e.g., an AP and a non-AP STA) start switching at the same time by allowing switching after a certain time (e.g., which may hereinafter be referred to as Starting Switching Alignment Time, and the corresponding term may be changed) after the received OBSS PPDU. Additionally or alternatively, the Starting Switching Alignment Time may start from after the MAC receives the PHYRXEND.indication from the PHY. For example, the corresponding value may be defined as SIFS, and may be defined as SIFS + alpha (α). For example, the AP may include Starting Switching Alignment Time information for the Secondary Channel Access Operation. This information may be included in a Management frame including a Beacon and a Probe Response of the AP, within a UHR Operation IE or in the form of a new IE. Additionally or alternatively, like an operation process such as NAVTimeout, without an announcement by the AP, the STAs may switch after the Starting Switching Alignment Time from after the MAC receives the PHYRXEND.indication from the PHY.

### Fifth Version/Type PPDU

For example, the above-described fifth version/type PPDU may mean a PPDU with a PHY version starting with HE and EHT. For example, a PPDU with a PHY version starting with EHT may include an EHT PPDU and a UHR PPDU. For example, the UHR PPDU may mean a PPDU defined by 802.11bn, and the specific name may be changed. When the fifth version/type PPDU is received on the PCH, the condition for triggering NPCA (or the condition for switching/accessing an NPCA primary channel (or an NPCH)) is determined in consideration of the following matters.

In PPDUs from 11ax onward, a TXOP field exists in the PHY header. In addition, since a BSS color field is added to the PHY header, it is possible to perform identification regarding whether it is a PPDU received from an OBSS based on the BSS color field therebetween. Therefore, for PPDU formats including an HE PPDU and thereafter, the STAs can switch based on one of the PHY header of the received PPDU and the MAC header of the received PPDU (based on the value set in the PHY/MAC based NPCA). For example, when an OBSS PPDU received on the PCH is an HE PPDU, the corresponding TXOP field and BSS color field are included in the HE-SIG-A field. For example, when an OBSS PPDU received on the PCH is an EHT PPDU, a TXOP field and a BSS Color field are included in the U-SIG field. For example, when an OBSS PPDU received on the PCH is a UHR PPDU, (although the PPDU structure is still under discussion) part/all of the U-SIG field of the EHT standard will be maintained. Assuming this, the UHR PPDU will, like the conventional EHT PPDU, include a TXOP field and a BSS Color field in the U-SIG field. For example, based on the above content, STAs (e.g., an AP and a non-AP STA) that have received an OBSS PPDU corresponding to an HE PPDU through the PCH can switch to the SCH (immediately) after completing decoding up to the BSS color and TXOP field of the HE-SIG-A field. Additionally or alternatively, STAs (e.g., an AP and a non-AP STA) that have received, on the PCH, an OBSS PPDU corresponding to a PPDU having a PHY version starting with EHT (e.g., an EHT PPDU, a UHR PPDU) can switch to the SCH (immediately) after decoding up to the BSS color and TXOP field of the U-SIG field. Based on this, the STAs (e.g., an AP and a non-AP STA) can switch to the SCH at an earlier time point based on the PHY Header of the received OBSS PPDU without decoding up to the MAC header of the received OBSS PPDU. Through this, the STA can have an advantageous technical effect of acquiring a longer TXOP on the SCH while performing NPCA/SCA.

Additionally or alternatively, when the OBSS PPDU received through the PCH corresponds to an HE PPDU, the STAs (e.g., an AP and a non-AP STA) that received the corresponding HE PPDU can decode up to the BSS color and TXOP field of the HE-SIG-A field included in the received PPDU, perform a validation check through a CRC check on the corresponding HE-SIG-A field, and then switch to the SCH.

Additionally or alternatively, when the OBSS PPDU received through the PCH corresponds to an EHT/UHR PPDU, the STAs (e.g., an AP and a non-AP STA) that received the corresponding PPDU can decode up to the BSS color and TXOP field of the U-SIG field included in the received PPDU, perform a validation check through a CRC check on the U-SIG field, and then switch to the SCH.

Additionally or alternatively, technical features for the case where OBSS traffic of EHT and after the EHT PPDU is received are described as follows. In other words, when OBSS traffic (or an OBSS PPDU) received through the PCH corresponds to an EHT PPDU and a PPDU defined after EHT (e.g., a UHR PPDU), a restriction rule may be additionally or alternatively defined.

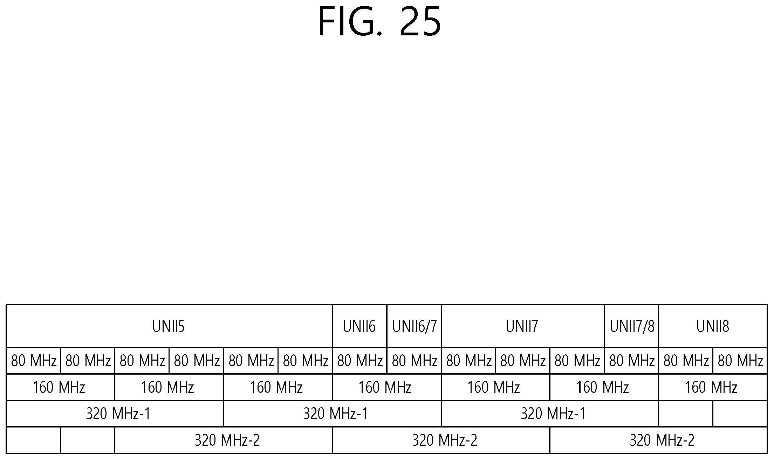

Figure 25 illustrates an example related to channelization. For example, the channelization of Figure 25 may be channelization based on IEEE 802.11be (or EHT). For example, according to channelization based on IEEE 802.11be, 320 MHz (or a 320 MHz band/channel/subchannel/resource) may be composed of two adjacent 160 MHz channels of the 6 GHz band. For example, 320 MHz (or a 320 MHz band/channel, etc.) may be distinguished into 320MHz-1 and 320MHz-2. For example, 320MHz-1 is defined as a 320 MHz channel having channel center frequency numbers of 31, 95, and 159, and 320MHz-2 may be defined as a 320 MHz channel having channel center frequency numbers of 63, 127, and 191.

As illustrated in Figure 25, a BSS configured based on 320 MHz may be configured in the 320MHz-1 band/channel, and may be configured in the 320MHz-2 band/channel. For example, according to the configuration of 320MHz-1 and 320MHz-2, etc., an OBSS BSS may overlap with the lower 160 MHz (and/or the higher 160 MHz).

Figure 26 illustrates an example of SCA/NPCA performance at 320 MHz.

For example, as in Figure 26, when an NPCA BSS is operating based on a 320MHz-1 band/channel, an OBSS PPDU having a bandwidth of 320 MHz (e.g., an EHT/UHR PPDU having a bandwidth of 320 MHz) may be received. For example, various examples of an OBSS PPDU (e.g., an EHT/UHR PPDU related to an OBSS) may be OBSS1, OBSS2, OBSS3, and/or OBSS4 illustrated in Figure 26.

Additionally or alternatively, OBSS1 of Figure 26 relates to an example in which a 160 MHz band/channel (e.g., the lower 160 MHz band/channel) among the entire 320 MHz band/channel (e.g., the 320 MHz-1 band/channel) is configured as the PCH. For example, OBSS2 of Figure 26 relates to an example in which a 160 MHz band/channel (e.g., the lower 160 MHz band/channel) among the entire 320 MHz band/channel (e.g., the 320 MHz-2 band/channel) is configured as the PCH. For example, OBSS3 of Figure 26 relates to an example in which a 160 MHz band/channel (e.g., the upper 160 MHz band/channel) among the entire 320 MHz band/channel (e.g., the 320 MHz-2 band/channel) is configured as the PCH. For example, OBSS4 of Figure 26 relates to an example in which a 160 MHz band/channel (e.g., the lower 160 MHz band/channel) among the entire 320 MHz band/channel (e.g., the 320 MHz-2 band/channel) is configured as the PCH. For example, the band/channel occupied by OBSS1 of Figure 26 may completely coincide with the band/channel of the NPCA BSS, and the band/channel occupied by the PCH of the OBSS1 may completely coincide with the band/channel occupied by the PCH of the NPCA BSS. For example, the band/channel occupied by OBSS2 of Figure 26 partially overlaps with the band/channel of the NPCA BSS, and the band/channel occupied by the PCH of the OBSS2 may not overlap with the NPCA BSS. For example, the band/channel occupied by OBSS3 of Figure 26 partially overlaps with the band/channel of the NPCA BSS, and the band/channel occupied by the PCH of the OBSS3 may not overlap with the NPCA BSS (e.g., the band/channel occupied by the PCH of the NPCA BSS). For example, the band/channel occupied by OBSS4 of Figure 26 partially overlaps with the band/channel of the NPCA BSS, and the band/channel occupied by the PCH of the OBSS4 may overlap with the band/channel occupied by the NCPH of the NPCA BSS.

As in Figure 26, when an OBSS PPDU (e.g., an EHT/UHR PPDU) is received, the Bandwidth information/field/subfield included in the U-SIG of the received PPDU may include information regarding the bandwidth value occupied by the corresponding PPDU. Specifically, information regarding whether the corresponding PPDU is transmitted/received through the 320MHz-1 or 320MHz-2 band/channel may be indicated by the U-SIG. When such Bandwidth information/field/subfield of the U-SIG is received, the STA that received the corresponding PPDU (e.g., an EHT/UHR PPDU) can determine whether the SCH on which it performs SCA/NPCA (e.g., the NPCH having a width of 160 MHz illustrated in Figure 26) overlaps with the channel/band occupied by OBSS traffic (e.g., OBSS1, OBSS2, OBSS3, and/or OBSS4). For example, SCA/NPCA may not be performed based on the band/channel occupied by the NPCH illustrated in Figure 26 overlapping with the received OBSS traffic (e.g., the channel/resource/band on which OBSS1, OBSS2, OBSS3, and/or OBSS4 is transmitted/received). For example, SCA/NPCA may be performed based on the band/channel related to the NPCH illustrated in Figure 26 not overlapping with the band/channel related to the received OBSS traffic (e.g., the channel/resource/band on which OBSS1, OBSS2, OBSS3, and/or OBSS4 is transmitted/received). Through the above determination, unnecessary switching to the SCH/NPCH can be prevented. Meanwhile, the terms of Figure 26 may be variously changed. For example, the name NPCA BSS used in Figure 26 may be changed to various names such as SCA BSS, and the technical features of the present specification are not limited by the specific terms of Figure 26.

Additionally or alternatively, when NPCA/SCA is performed according to the present specification, there may exist an assumption that the determination of the NPCH is performed within a Secondary (i.e., half of the BSS operating channel width) channel/subchannel/resource. In other words, the example of Figure 26 may be an example in which the NPCH is determined within a Secondary (i.e., half of the BSS operating channel width) channel/subchannel/resource. According to this assumption, an AP operating at 320 MHz may determine a Secondary 160 channel (i.e., Secondary 160 MHz) as the NPCH. In other words, in the example of Figure 26, the NPCH may exist on the Secondary 160 MHz.

A specific example related to the above is described based on Example 1, Example 2, and Example 3 as follows.

### Example 1)

Example 1 described below relates to a case where the 320 MHz (e.g., 320MHz-1 band/channel/band/resource) on which the NPCA BSS operates and the PPDU bandwidth of OBSS traffic (e.g., 320MHz-1 band/channel/band/resource) are the same as each other. For example, the following technical feature may be related to the case of comparing the NPCA BSS and OBSS1 illustrated in Figure 26.

For example, based on the channelization of Figure 25, the BSS operating channel width (e.g., 320MHz-1 band/channel/band/resource) on which the NPCA BSS operates may be the same as the bandwidth (or band/channel/band/resource) of OBSS traffic (e.g., an EHT PPDU). For example, when the Bandwidth field included in the U-SIG field of OBSS traffic (e.g., an EHT PPDU) indicates 320MHz-1, the bandwidth of the OBSS traffic may be determined to be the same as the BSS operating channel width on which the NPCA BSS operates. In this case, since the band/channel related to the NPCH of the NPCA BSS always overlaps with the band/channel related to the OBSS traffic, it is preferable that the corresponding STA does not perform NPCA/SCA. That is, when the above condition is satisfied, the corresponding STA does not perform a switch to the NPCH/SCH.

### Example 2)

Example 2 described below relates to a case where the 320 MHz (e.g., 320MHz-1 band/channel/band/resource) on which the NPCA BSS operates and the PPDU bandwidth of OBSS traffic (e.g., 320MHz-2 band/channel/band/resource) are different. For example, the following technical feature may be related to the case of comparing the NPCA BSS and OBSS2 (or OBSS3) illustrated in Figure 26.

For example, based on the channelization of Figure 25, the BSS operating channel width (e.g., 320MHz-1 band/channel/band/resource) on which the NPCA BSS operates and the bandwidth (or band/channel/band/resource) of OBSS traffic (e.g., an EHT PPDU) may be different. For example, when the Bandwidth field included in the U-SIG field of OBSS traffic (e.g., an EHT PPDU) indicates 320MHz-2, 1) the bandwidth of the OBSS traffic overlaps with the 160 MHz channel including the PCH of the NPCA BSS (e.g., the Primary 160 MHz), but 2) the bandwidth of the OBSS traffic does not overlap with the 160 MHz channel including the NPCH of the NPCA BSS (e.g., the Secondary 160 MHz). For example, when the above condition is satisfied, the corresponding STA may perform a switch to the NPCH/SCH. In other words, in Example 2, the band/channel related to the NPCA BSS and the band/channel related to OBSS2 (or OBSS3) partially overlap, and the band/channel related to the PCH on the NPCA BSS and the band/channel related to OBSS2 (or OBSS3) overlap, but the band/channel related to the NPCH on the NPCA BSS does not overlap with the band/channel related to OBSS2 (or OBSS3). Based on this, the corresponding STA may perform a switch to the NPCH/SCH allocated on the NPCA BSS.

### Example 3)

Example 3 described below relates to a case where the 320 MHz (e.g., 320MHz-1 band/channel/band/resource) on which the NPCA BSS operates and the PPDU bandwidth of OBSS traffic (e.g., 320MHz-2 band/channel/band/resource) are different. For example, the following technical feature may be related to the case of comparing the NPCA BSS and OBSS4 illustrated in Figure 26.

For example, based on the channelization of Figure 25, the BSS operating channel width (e.g., 320MHz-1) on which the NPCA BSS operates and the bandwidth of OBSS traffic (e.g., an EHT PPDU) may be different. For example, when the Bandwidth field included in the U-SIG field of OBSS traffic (e.g., an EHT PPDU) indicates 320MHz-2, the bandwidth of the OBSS traffic may overlap with the 160 MHz channel including the NPCH of the NPCA BSS (e.g., the Secondary 160 MHz). For example, when the above condition is satisfied, since the PCH is not Busy and the NPCA performance condition is not satisfied, NPCA/SCA may not be performed. As a result, NPCA/SCA is not performed, and PCH-based channel access may be performed according to the conventional baseline operation. In other words, in Example 3, the band/channel related to the NPCA BSS and the band/channel related to OBSS4 partially overlap, but the band/channel related to the PCH on the NPCA BSS does not overlap with the band/channel related to OBSS4. Based on this, the STA does not need to perform NPCA/SCA, and channel access may be performed based on the PCH on the NPCA BSS.

Additionally or alternatively, the examples related to Figure 25 and Figure 26 may be variously modified. For example, the above-described example was described based on an assumption that the NPCH is determined within a Secondary (i.e., half of the BSS operating channel width) channel/subchannel/resource. This assumption may be changed. For example, the NPCH may exist anywhere within the BSS Operating channel width. Accordingly, the NPCH may not be configured as the Secondary 160 MHz, but may be allocated/determined on the Secondary 80 MHz in various frequency regions.

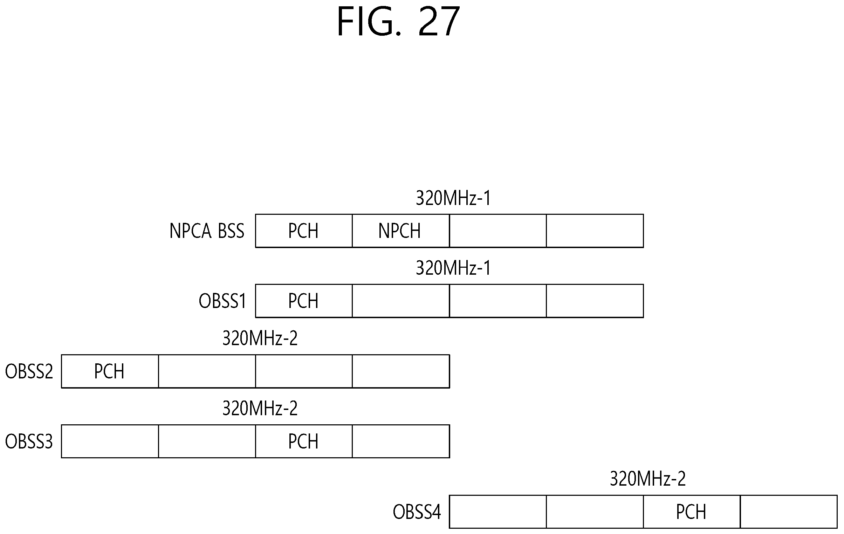

Figure 27 illustrates an example of SCA/NPCA performance at 320 MHz. For example, although the NPCH was allocated/determined on the Secondary 160 MHz in the example of Figure 26, the NPCH may exist anywhere within the BSS Operating channel width in the example of Figure 27. Accordingly, in the example of Figure 27, the NPCH may be allocated/determined on various Secondary 80 MHz.

### Example 4)

For example, Example 4 relates to a case where the 320 MHz band/channel (e.g., the 320MHz-1 band/channel) on which the NPCA BSS operates and the band/channel (e.g., the 320MHz-1 band/channel) occupied by received OBSS traffic (e.g., an OBSS PPDU or an EHT/UHR PPDU related to an OBSS) are the same. For example, Example 4 relates to an example in which the NPCA BSS and OBSS1 are compared in Figure 27. In other words, Example 4 relates to a case where the band occupied by the NPCA BSS and the band/channel occupied by the OBSS PPDU completely coincide.

When determined based on the channelization of Figure 25 (e.g., 802.11be/EHT channelization), when the channel/band indicated by the U-SIG field of OBSS traffic (e.g., an EHT/UHR PPDU) coincides with the channel/band related to the BSS operating channel width on which the NPCA BSS operates, NPCA/SCA may not be performed. For example, in the above case, the STA may not switch to the NPCH. In other words, as in the example of OBSS1 of Figure 27, when the band/channel indicated by the Bandwidth field of the U-SIG of OBSS traffic (an EHT PPDU) corresponds to 320 MHz-1, and the band/channel corresponding to the BSS operating channel width is also 320MHz-1, NPCA/SCA may not be performed. This is because the NPCH on the NPCA BSS and the OBSS traffic (e.g., an EHT/UHR PPDU related to an OBSS) always overlap.

### Example 5)

For example, Example 5 may relate to a case where the 320 MHz band/channel (e.g., the 320MHz-1 band/channel) on which the NPCA BSS operates and the band/channel (e.g., the 320MHz-1 band/channel) occupied by OBSS traffic (e.g., an OBSS PPDU or an EHT/UHR PPDU related to an OBSS) are not the same. In other words, Example 5 may relate to a case where the 320 MHz band/channel (e.g., the 320MHz-1 band/channel) on which the NPCA BSS operates and the band/channel (e.g., the 320MHz-1 band/channel) occupied by OBSS traffic (e.g., an OBSS PPDU or an EHT/UHR PPDU related to an OBSS) partially overlap. In other words, Example 5 relates to an example in which the NPCA BSS and OBSS2 (or OBSS3) are compared in Figure 27. In other words, Example 5 relates to a case where the band occupied by the NPCH on the NPCA BSS overlaps with the band/channel occupied by the OBSS PPDU.

When determined based on the channelization of Figure 25 (e.g., 802.11be/EHT channelization), when the channel/band indicated by the U-SIG field of OBSS traffic (e.g., an EHT/UHR PPDU) partially overlaps with the channel/band related to the BSS operating channel width on which the NPCA BSS operates, NPCA/SCA may not be performed. In other words, as in the example of OBSS2 (or OBSS3) of Figure 27, when the band/channel indicated by the Bandwidth field of the U-SIG of OBSS traffic (e.g., an EHT/UHR PPDU) corresponds to 320 MHz-2, and the band/channel corresponding to the BSS operating channel width is also 320MHz-1, NPCA/SCA may not be performed. In other words, when the NPCH located on the Secondary 80MHz and the band/channel indicated by the Bandwidth field of the U-SIG of OBSS traffic (an EHT/UHR PPDU) overlap, NPCA/SCA may not be performed.

### Example 6)

For example, Example 6 may relate to a case where the 320 MHz band/channel (e.g., the 320MHz-1 band/channel) on which the NPCA BSS operates and the band/channel (e.g., the 320MHz-2 band/channel) occupied by OBSS traffic (e.g., an OBSS PPDU or an EHT/UHR PPDU related to an OBSS) are not the same. In other words, Example 6 may relate to a case where the 320 MHz band/channel (e.g., the 320MHz-1 band/channel) on which the NPCA BSS operates and the band/channel (e.g., the 320MHz-2 band/channel) occupied by OBSS traffic (e.g., an OBSS PPDU or an EHT/UHR PPDU related to an OBSS) partially overlap. In other words, Example 6 relates to an example in which the NPCA BSS and OBSS4 are compared in Figure 27. In other words, Example 6 relates to a case where the band/channel occupied by the NPCH on the NPCA BSS and the band/channel occupied by the OBSS PPDU do not overlap.

In the case of Example 6, when determined based on the channelization of Figure 25 (e.g., 802.11be/EHT channelization), the BSS operating channel width on which the NPCA BSS operates is related to the 320MHz-1 band/channel, and the Bandwidth field of the U-SIG of OBSS traffic (e.g., an EHT/UHR PPDU) is related to the 320MHz-2 band/channel. For example, in the case of OBSS4 of Figure 27, the OBSS traffic (e.g., an EHT/UHR PPDU) may not overlap with the NPCH. In this case, since the PCH is not Busy, the NPCA performance condition is not satisfied, and accordingly, NPCA/SCA may not be performed. As a result, PCH-based channel access is performed based on the conventional baseline operation. In other words, in Example 6, the band/channel related to the NPCA BSS and the band/channel related to OBSS4 partially overlap, but since the band/channel related to the PCH on the NPCA BSS does not overlap with the band/channel related to OBSS4, NPCA/SCA does not need to be performed. Based on this, the STA may perform channel access based on the PCH on the NPCA BSS.

An example of the present specification may be expressed by various procedure flowcharts.

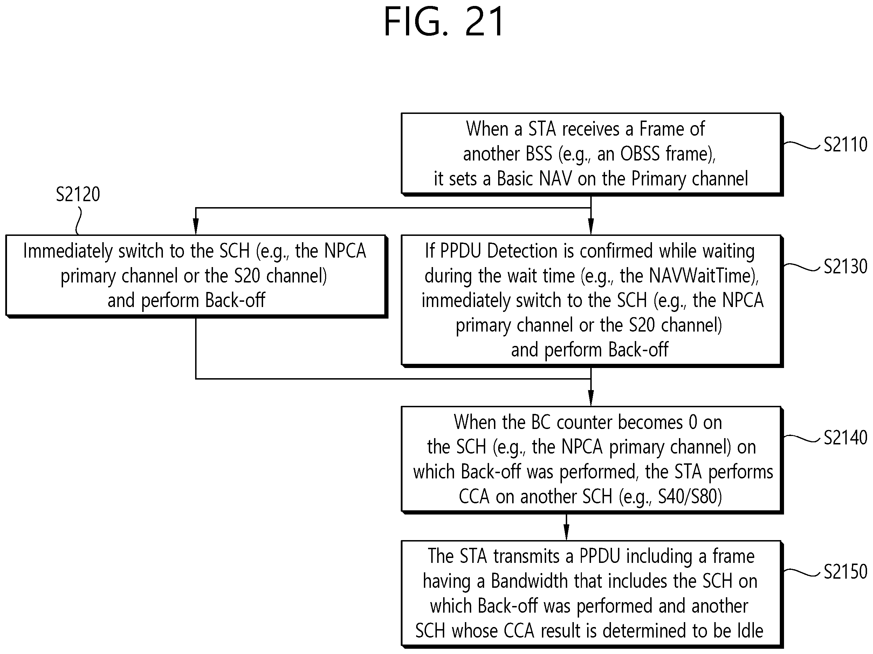

For example, Figure 21 is a procedure flowchart related to a transmitting STA. The operation of Figure 21 may be performed at an AP or a non-AP STA. For example, the AP performing Figure 21 may be any one of a plurality of APs affiliated with a multi-link device (e.g., an AP MLD). For example, the non-AP STA performing Figure 21 may be any one of a plurality of non-AP STAs affiliated with a multi-link device (e.g., a non-AP STA MLD).

As in the illustrated step S2110, when a STA receives a Frame of another BSS (e.g., an OBSS frame), it may set a Basic NAV on the Primary channel.

The illustrated step S2120 relates to the case of operating based on the above-described Case 1. For example, as described above, Case 1 may relate to the case of receiving an OBSS PPDU on the PCH and immediately performing a switch to the SCH. For example, as in the illustrated step S2120, the STA may immediately switch to the SCH (e.g., the NPCA primary channel or the S20 channel or the NPCH) and perform Back-off.

The illustrated step S2130 relates to the case of operating based on the above-described Case 2 (e.g., including Case 2-1 and Case 2-2). For example, as described above, a STA operating based on Case 2 may, after receiving an OBSS PPDU on the PCH, defer Access or switch to the SCH for up to the maximum NAV wait time (e.g., the NAVWaittime) without immediately switching to the SCH. If PPDU detection (e.g., detection of a CTS and/or Data frame) is performed during the NAV wait time, the STA may switch/access to the SCH. For example, as in the illustrated step S2130, if PPDU Detection is confirmed while waiting during the wait time (e.g., the NAVWaitTime), the STA may immediately switch to the SCH (e.g., the NPCA primary channel or the NPCH or the S20 channel) and perform Back-off.

For example, after the above step S2120 or the above step S2130 is performed, step S2130 may be performed. For example, as in the illustrated step S2140, when the BC counter becomes 0 on the SCH (e.g., the NPCA primary channel or the NPCH) on which Back-off was performed, the STA may perform CCA on another SCH (e.g., S40/S80).

For example, when channel extension is applied to an additional SCH, step S2150 may be performed. For example, as in the illustrated step S2150, the STA may transmit a PPDU including a frame having a Bandwidth that includes the SCH on which Back-off was performed and another SCH whose CCA result is determined to be Idle.

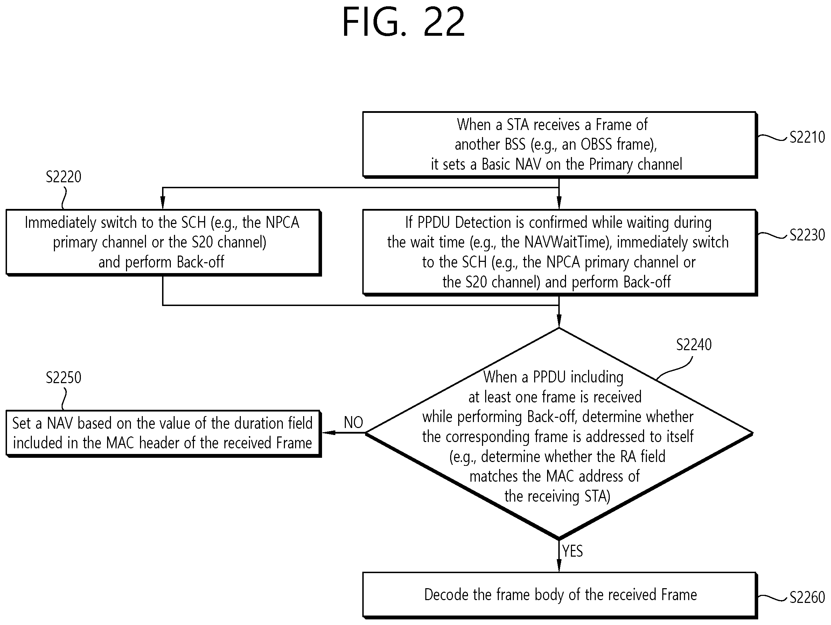

For example, Figure 22 is a procedure flowchart related to a receiving STA. The operation of Figure 22 may be performed at an AP or a non-AP STA. For example, the AP performing Figure 22 may be any one of a plurality of APs affiliated with a multi-link device (e.g., an AP MLD). For example, the non-AP STA performing Figure 22 may be any one of a plurality of non-AP STAs affiliated with a multi-link device (e.g., a non-AP STA MLD).

As in the illustrated step S2210, when a STA receives a Frame of another BSS (e.g., an OBSS frame), it may set a Basic NAV on the Primary channel.

The illustrated step S2220 relates to the case of operating based on the above-described Case 1. For example, as described above, Case 1 may relate to the case of receiving an OBSS PPDU on the PCH and immediately performing a switch to the SCH. For example, as in the illustrated step S2220, the STA may immediately switch to the SCH (e.g., the NPCA primary channel or the NPCH or the S20 channel) and perform Back-off.

The illustrated step S2230 relates to the case of operating based on the above-described Case 2 (e.g., including Case 2-1 and Case 2-2). For example, as described above, a STA operating based on Case 2 may, after receiving an OBSS PPDU on the PCH, defer Access or switch to the SCH for up to the maximum NAV wait time (e.g., the NAVWaittime) without immediately switching to the SCH. If PPDU detection (e.g., detection of a CTS and/or Data frame) is performed during the NAV wait time, the STA may switch/access to the SCH. For example, as in the illustrated step S2230, if PPDU Detection is confirmed while waiting during the wait time (e.g., the NAVWaitTime), the STA may immediately switch to the SCH (e.g., the NPCA primary channel or the NPCH or the S20 channel) and perform Back-off.

For example, after the above step S2220 or the above step S2230 is performed, step S2230 may be performed. For example, as in the illustrated step S2240, when a PPDU including at least one frame is received while performing Back-off, the STA may determine whether the corresponding frame is addressed to itself (e.g., determine whether the RA field matches the MAC address of the receiving STA).

If, as a result of the determination, the corresponding frame is addressed to itself, step S2260 may be performed. For example, according to step S2260, the STA may decode the frame body of the received Frame.

If, as a result of the determination, the corresponding frame is not addressed to itself, step S2250 may be performed. For example, according to step S2250, the STA may set a NAV based on the value of the duration field included in the MAC header of the received Frame.

An example of the present specification may be variously modified. An example of the present specification may be modified in consideration of the following.

For example, a STA (e.g., an AP or a non-AP STA) performing NPCA/SCA may transmit a frame/PPDU on an SCH even during the time when a NAV (e.g., a Basic NAV set by a received OBSS PPDU) is set on the PCH (e.g., a channel including a Primary 20 MHz channel). For example, the STA may perform transmission of a PPDU on at least one SCH in the IDLE state determined through back-off performed on one or more SCHs (and a CCA result of one or more SCHs on which back-off is not performed) (e.g., a channel including an S20 channel or an NPCA primary channel). For example, the PPDU may be subjected to preamble puncturing for a subchannel corresponding to the PCH.

Additionally or alternatively, a TXOP acquired for frame/PPDU transmission on an SCH may be set to end before the time point at which a NAV (e.g., a Basic NAV) on the PCH ends. For example, the length of the TXOP may be set/indicated through the duration/ID field of the corresponding frame (e.g., the MAC header of a frame/PPDU transmitted on the SCH). For example, the value of the duration/ID field may be set to a value of the time required for a frame/PPDU exchange following the corresponding frame/PPDU (e.g., a time including an inter-frame space (IFS)).

Additionally or alternatively, an EDCA Parameter Set for each SCH on which Back-off is performed may be set to an EDCA Parameter Set or a MU EDCA Parameter Set on the PCH, or a new EDCA Parameter Set. This EDCA Parameter Set may be applied identically or individually (or differently) to all SCHs.

In the present specification, a STA (e.g., an AP or a non-AP STA) that receives a frame transmitted through SCA/NPCA may perform frame detection on an SCH (e.g., an S20 channel or an NPCA primary Channel or an NPCH) even during the time when a NAV (e.g., a Basic NAV) is set on the PCH. For example, a STA (e.g., an AP or a non-AP STA) may perform back-off on an SCH because there is a frame to transmit, or even when there is no frame to transmit, it may attempt to receive whether there is a frame addressed to itself on the SCA. In addition, the STA may perform NAV setting/resetting based on the value of the duration/ID field of a frame detected on the SCH.

Additionally or alternatively, an EDCA Parameter Set for each SCH on which Back-off is performed may be set to an EDCA Parameter Set or a MU EDCA Parameter Set on the PCH, or a new EDCA Parameter Set. This EDCA Parameter Set may be applied identically or individually (or differently) to all SCHs.

Additionally or alternatively, when a Basic NAV is set on the PCH due to an OBSS PPDU, a STA (e.g., an AP or non-AP STA) may trigger NPCA, switch to an NPCA primary channel (or an NPCH), or access an NPCA primary channel based on the technical features of the above-described Case 1 or Case 2. For example, a STA based on the above-described Case 1 may, based on a Basic NAV being set on the PCH, immediately trigger NPCA (or switch to an NPCA primary channel, or access an NPCA primary channel).

Additionally or alternatively, a STA based on the above-described Case 2 may not immediately trigger NPCA (or switch to an NPCA primary channel (or an NPCH), or access an NPCA primary channel) based on a Basic NAV being set on the PCH. Specifically, a STA based on the above-described Case 2 may not immediately trigger NPCA, but wait for a preset wait time (e.g., referred to as NAVWaitTime) (or defer the triggering of NPCA, defer the access of NPCA, or defer the switch to the SCH). For example, during the above-described waiting, when the corresponding STA performs PPDU detection, it may trigger NPCA (or switch to an NPCA primary channel, or access an NPCA primary channel). For example, the PPDU detection may mean a case where a PPDU including a CTS is received on the PCH, or a PPDU including a Data frame related to RTS/CTS exchange is received on the PCH. As described above, the NAV wait time or NAVWaitTime may be calculated based on a parameter widely known in wireless LAN systems. For example, the NAVWaitTime may be calculated as (2 × aSIFSTime) + (CTS_Time) + aRxPHYStartDelay + (2 × aSlotTime), and CTS_Time may be calculated according to the length and PHY data rate for a CTS frame.

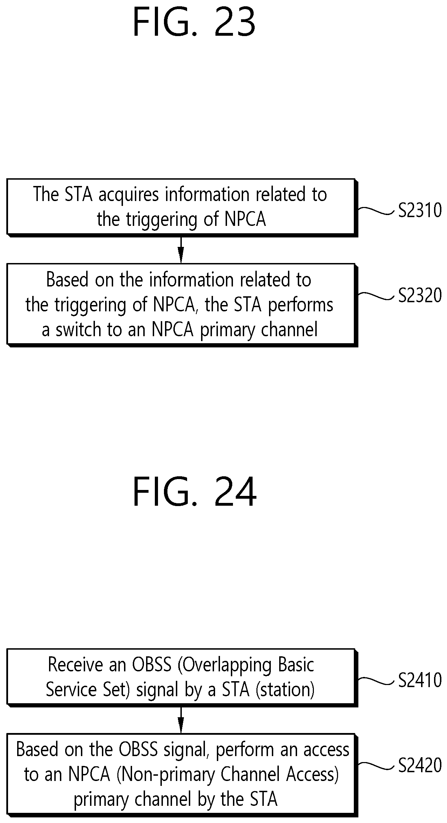

Figure 23 is another procedure flowchart illustrating an example of the present specification.

The illustrated steps S2310 and S2320 relate to an example of the present specification. The operation of Figure 23 may be performed at an AP or a non-AP STA. For example, the operation of Figure 23 may be performed by a device performing Figure 21 or Figure 22.

For example, as in step S2310, the STA may acquire information related to the triggering of NPCA. For example, the procedure of acquiring information related to the triggering of NPCA (or information related to a trigger condition) may be a procedure of acquiring information about an OBSS PPDU (or an OBSS signal/traffic/frame, etc.) received on the PCH (a channel including a Primary 20 MHz channel). Additionally or alternatively, step S2310 may include a procedure of determining whether a BSS PPDU received on the PCH is an OBSS PPDU or an Intra-BSS PPDU. A specific method of performing OBSS PPDU identification based on the Version/Type of a received PPDU may be the same as the above-described example of the present specification.

Additionally or alternatively, step S2310 may include at least one of a procedure of receiving an OBSS PPDU by the STA, a procedure of determining whether the OBSS PPDU includes an RTS/MU-RTS, and/or a procedure of determining whether the OBSS PPDU is a non-HT/HT/VHT/HE/EHT/UHR PPDU. Additionally or alternatively, step S2310 may include a process of confirming/acquiring the TXOP length and/or PPDU length of the OBSS PPDU by the STA.

For example, as in step S2320, the STA may perform a switch to an NPCA primary channel (e.g., a channel including an SCH or an S20 channel) based on the information related to the triggering of NPCA. Additionally or alternatively, performing the switch to the NPCA primary channel may be expressed as attempting/performing access to the NPCA primary channel, or attempting/performing NPCA/SCA.

As in step S2320, a switch to an NPCA primary channel (e.g., a channel including an SCH or an S20 channel) may be performed based on the information related to the triggering of NPCA. For example, when the various triggering conditions proposed in the present specification are satisfied, the corresponding STA (e.g., an AP or a non-AP STA) may start/attempt a switch to the above-described SCH (or NPCA primary channel or NPCH). For example, when the various triggering conditions proposed in the present specification are not satisfied, the corresponding STA (e.g., an AP or a non-AP STA) cannot start/attempt a switch to the above-described SCH (or NPCA primary channel).

For example, the information related to the triggering of NPCA may include information about a Basic NAV related to the PCH. For example, a STA operating based on Case-1 of the present specification may, according to step S2320, perform a switch to an NPCA primary channel (e.g., a channel including an SCH or an S20 channel) immediately when a Basic NAV is set on the PCH.

For example, the information related to the triggering of NPCA may include information related to the Version/type of a received PPDU (e.g., an OBSS PPDU). In addition, the information related to the triggering of NPCA may include information regarding whether a received PPDU (e.g., an OBSS PPDU) includes an RTS (or MU-RTS). Accordingly, a STA operating based on Case 2 of the present specification may, according to step S2320, when a received PPDU (e.g., an OBSS PPDU) includes an RTS (or MU-RTS), wait for up to the NAVWaitTime without performing a switch to an NPCA primary channel (e.g., a channel including an SCH or an S20 channel) immediately. When a response frame (e.g., a Data frame or a CTS related to RTS/CTS exchange) is received on the PCH while the STA waits during the NAVWaitTime, the STA may perform a switch to an NPCA primary channel (e.g., a channel including an SCH or an S20 channel) immediately.

Additionally or alternatively, when the above step S2310 and step S2320 are performed, at least one of steps S2140 and S2150 may be sequentially performed. Additionally or alternatively, when the above step S2310 and step S2320 are performed, at least one of steps S2240 to S2260 may be sequentially performed.

Figure 24 is another procedure flowchart illustrating an example of the present specification. The operation of Figure 24 may be performed at an AP or a non-AP STA. For example, the operation of Figure 24 may be performed by a device performing Figure 21, Figure 22, or Figure 23.

According to the illustrated step S2410, the STA may receive an OBSS (Overlapping Basic Service Set) signal. For example, the OBSS signal may be the OBSS PPDU (or traffic/frame, etc.). For example, the OBSS signal may be received through the above-described PCH (a channel including a Primary 20 MHz channel). For example, a Basic NAV may be set for the PCH based on the OBSS signal.

According to the illustrated step S2420, the STA may perform an access to an NPCA (Non-primary Channel Access) primary channel by the STA based on the OBSS signal. For example, the access to the NPCA primary channel may include performing switching to the NPCA primary channel by the STA. For example, the access to the NPCA primary channel may mean performing the NPCA/SCH operation. For example, the access to the NPCA primary channel may mean triggering the NPCA. For example, when the access to the NPCA primary channel is performed, the STA may perform Back-off for the NPCA primary channel.

According to step S2420, the access/switch to the NPCA primary channel is performed based on a received OBSS signal (e.g., an OBSS PPDU). For example, the start time point of the access/switch to the NPCA primary channel may be determined according to a received OBSS signal (e.g., an OBSS PPDU). For example, whether to perform the access/switch to the NPCA primary channel may be determined according to a received OBSS signal (e.g., an OBSS PPDU).

According to step S2420, the access/switch to the NPCA primary channel may be performed based on at least one of a Basic NAV (Network Allocation Vector) set for a primary channel based on the OBSS signal and a wait time related to the OBSS signal. In other words, the access/switch to the NPCA primary channel may be performed immediately after the Basic NAV is set, or after waiting during a wait time related to the OBSS signal (e.g., the above-described NAV Wait Time). In other words, the STA may defer the access to the NPCA primary channel based on the NAV wait time (e.g., the above-described NAV Wait Time). For example, when a CTS or a Data frame (related to RTS/CTS exchange) is received (on the PCH) during the NAV wait time, the access to the NPCA primary channel may be performed immediately based on the CTS/Data-frame detection. In other words, when the STA receives the CTS during the NAV wait time, the STA may perform the access to the NPCA primary channel based on receiving a data frame or the CTS through the primary channel. This case relates to an example of Case 2 described in the present specification. For example, even if a received PPDU includes an RTS/MU-RTS, the above-described NAV wait time (e.g., the above-described NAV Wait Time) may not be considered, and the STA may perform the access to the NPCA primary channel (immediately) based on the Basic NAV. This case relates to an example of Case 1 described in the present specification. For example, the NAV wait time (e.g., the above-described NAV Wait Time) may be calculated as (2 × aSIFSTime) + (CTS_Time) + aRxPHYStartDelay + (2 × aSlotTime) based on a parameter obvious to those skilled in the art. In other words, the NAV wait time may be set based on the length of the CTS (related to the RTS (or MU-RTS)).

Additionally or alternatively, when the above step S2410 and step S2420 are performed, at least one of steps S2140 and S2150 may be sequentially performed. Additionally or alternatively, when the above step S2410 and step S2420 are performed, at least one of steps S2240 to S2260 may be sequentially performed.

Additionally or alternatively, when the above step S2410 and step S2420 are performed, transmission and reception of a PPDU on a channel other than the PCH is possible due to NPCA/SCA. Accordingly, based on the access to the NPCA primary channel, the STA may perform PPDU transmission based on a first channel including the NPCA primary channel. In addition, for example, based on the access to the NPCA primary channel, the STA may receive a PPDU through a second channel including the NPCA primary channel. For example, the PPDU transmitted/received through the first/second channel may be at least one of the above-described non-HT (non-High Throughput) PPDU (Physical Protocol Data Unit), HT (High Throughput) PPDU, VHT (Very High Throughput) PPDU, HE (High Efficiency) PPDU, EHT (Extremely High Throughput) PPDU, and/or UHR (Ultra High Reliability) PPDU.

The technical features of the present specification may be performed by various devices. The device of the present specification may be the device described in Figure 1/Figure 14. The device of the present specification may include at least one processor; and at least one computer memory that is operably connectable to the at least one processor and stores instructions that, based on being executed by the at least one processor, perform operations.

For example, the processor may be the processor described in Figure 1 and/or Figure 14. That is, as described above, the processor of the present specification may include at least one of a DSP (digital signal processor), a CPU (central processing unit), a GPU (graphics processing unit), and a modem (modulator and demodulator). The processor includes not only computers with various architectures such as single/multiple processor architectures and sequential (Von Neumann)/parallel architectures, but also specialized circuits such as FPGAs, ASICs, signal processing devices, and other devices. For example, the processor of the present specification may be a SNAPDRAGON^{®} series processor manufactured by Qualcomm^{®}, an EXYNOS^{®} series processor manufactured by Samsung^{®}, an A series processor manufactured by Apple^{®}, a HELIO^{®} series processor manufactured by MediaTek^{®}, an ATOM^{®} series processor manufactured by INTEL^{®}, or a processor that enhances these.

For example, the instructions may refer to computer program instructions executed by the at least one processor. The (computer program) instructions provide logic and/or routines that allow the technical features of the present specification to be performed by the processor. The at least one processor may read the at least one memory, thereby loading and executing a computer program.

The computer program(s) defined by the instructions may arrive at the device (e.g., STA) of the present specification through an appropriate delivery mechanism. The delivery mechanism may be, for example, a computer-readable storage medium, a computer program product, a memory device, a recording medium such as a CD-ROM or DVD, or an article of manufacture that tangibly embodies the computer program. The delivery mechanism may be a signal configured to reliably transmit a computer program via a wireless or electrical connection.

The (computer program) instructions may include software or firmware for a programmable processor (e.g., programmable content of a hardware device whether instructions for a processor, or configuration settings for a fixed-function device, gate array or programmable logic device, etc.).

For example, the memory may be the memory described in Figure 1 and/or Figure 14. That is, as described above, the memory of the present specification may store control information related to the operation of the STA of the present specification, or information related to signals transmitted and received by the corresponding STA (e.g., a PPDU including management/control/data frames).

The technical features of the present specification may also be implemented as at least one computer readable medium (CRM). The CRM includes instructions based on being executed by the at least one processor described above. The instructions stored in the CRM may be the above-described computer program instructions.

The device of the present specification may further include a transceiver. The transceiver may be operably connectable to the memory/processor, etc. The transceiver may be the transceiver illustrated in Figure 1 and/or Figure 14.

The above-described technical features of the present specification are applicable to various applications or business models. For example, the above-described technical features may be applied for wireless communication in a device that supports artificial intelligence (AI).

Artificial intelligence refers to a field that studies artificial intelligence or methodologies that can create it, and machine learning refers to a field that defines various problems dealt with in the field of artificial intelligence and studies methodologies for solving them. Machine learning is also defined as an algorithm that improves the performance of a certain task through steady experience with the task.

An artificial neural network (ANN) is a model used in machine learning, and may refer to an overall model with problem-solving capabilities that is composed of artificial neurons (nodes) forming a network through the combination of synapses. An artificial neural network may be defined by a connection pattern between neurons of different layers, a learning process that updates model parameters, and an activation function that generates an output value.

An artificial neural network may include an Input Layer, an Output Layer, and optionally one or more Hidden Layers. Each layer includes one or more neurons, and an artificial neural network may include synapses connecting neurons to neurons. In an artificial neural network, each neuron may output a function value of the activation function for input signals, weights, and a bias input through synapses.

A model parameter refers to a parameter determined through learning, and includes the weight of a synapse connection and the bias of a neuron, and the like. And a hyperparameter refers to a parameter that must be set before learning in a machine learning algorithm, and includes a Learning Rate, the number of iterations, a mini-batch size, an initialization function, and the like.

The purpose of learning of an artificial neural network may be viewed as determining model parameters that minimize a loss function. A loss function may be used as an index for determining optimal model parameters in the learning process of an artificial neural network.

Machine learning may be classified into Supervised Learning, Unsupervised Learning, and Reinforcement Learning according to the learning method.

Supervised learning refers to a method of training an artificial neural network in a state where a label for training data is given, and a label may mean a correct answer (or result value) that an artificial neural network must infer when the training data is input to the artificial neural network. Unsupervised learning may mean a method of training an artificial neural network in a state where a label for training data is not given. Reinforcement learning may mean a learning method that trains an agent defined in a certain environment to select an action or sequence of actions that maximizes a cumulative reward in each state.

Machine learning implemented as a Deep Neural Network (DNN) including a plurality of hidden layers among artificial neural networks is also called deep learning, and deep learning is a part of machine learning. Hereinafter, machine learning is used in a sense that includes deep learning.

In addition, the above-described technical features may be applied to wireless communication of a robot.

A robot may refer to a machine that automatically processes or operates a given task by its own ability. In particular, a robot having a function of recognizing an environment and performing an operation by self-determination may be referred to as an intelligent robot.

Robots may be classified into industrial, medical, household, military, and the like, according to the purpose or field of use. A robot may include a driving unit including an actuator or a motor to perform various physical operations such as moving robot joints. In addition, a movable robot includes wheels, brakes, propellers, and the like in the driving unit, so that it can travel on the ground or fly in the air through the driving unit.

In addition, the above-described technical features may be applied to a device that supports extended reality.

Extended reality is a generic term for Virtual Reality (VR), Augmented Reality (AR), and Mixed Reality (MR). VR technology provides objects or backgrounds of the real world only as CG images, AR technology provides virtually created CG images together on top of real object images, and MR technology is a computer graphics technology that provides by mixing and combining virtual objects in the real world.

MR technology is similar to AR technology in that it shows real objects and virtual objects together. However, there is a difference in that, in AR technology, a virtual object is used in a form that complements a real object, whereas in MR technology, a virtual object and a real object are used with equal characteristics.

XR technology may be applied to an HMD (Head-Mount Display), a HUD (Head-Up Display), a mobile phone, a tablet PC, a laptop, a desktop, a TV, digital signage, and the like, and a device to which XR technology is applied may be referred to as an XR Device.

## Claims

1. A method performed in a wireless local area network (WLAN) system, the method comprising:
receiving, by a station (STA), an Overlapping Basic Service Set (OBSS) signal; and
based on the OBSS signal, performing, by the STA, an access to a Non-primary Channel Access (NPCA) primary channel, wherein the access to the NPCA primary channel is performed based on at least one of a Basic Network Allocation Vector (NAV) set for a primary channel based on the OBSS signal and a wait time related to the OBSS signal.

2. The method of claim 1, wherein the access to the NPCA primary channel includes performing, by the STA, switching to the NPCA primary channel,
wherein, based on the switching to the NPCA primary channel, the STA performs a back-off for the NPCA primary channel.

3. The method of claim 1, wherein the OBSS signal includes a Request to Send (RTS) or a Multi-User RTS (MU-RTS),
wherein the wait time related to the OBSS signal is a NAV wait time related to the RTS or the MU-RTS,
wherein the NAV wait time is set based on a length of a Clear to Send (CTS) related to the RTS or the MU-RTS.

4. The method of claim 3, wherein the STA defers the access to the NPCA primary channel based on the NAV wait time.

5. The method of claim 4, wherein, based on the STA receiving the CTS during the NAV wait time, the STA performs the access to the NPCA primary channel based on receiving a data frame or the CTS through the primary channel.

6. The method of claim 1, wherein the OBSS signal includes a Request to Send (RTS) or a Multi-User RTS (MU-RTS), wherein the STA performs the access to the NPCA primary channel based on the Basic NAV without considering the wait time related to the OBSS signal.

7. The method of claim 1, wherein the primary channel includes a Primary 20 MHz channel, and the NPCA primary channel includes a Secondary 20 MHz channel.

8. The method of claim 1, wherein the OBSS signal includes at least one of a non-High Throughput (non-HT) Physical Protocol Data Unit (PPDU), a High Throughput (HT) PPDU, a Very High Throughput (VHT) PPDU, a High Efficiency (HE) PPDU, an Extremely High Throughput (EHT) PPDU, and/or an Ultra High Reliability (UHR) PPDU,
wherein, based on a PPDU version of the OBSS signal, a time point at which the access to the Non-primary Channel Access (NPCA) primary channel is performed is determined.

9. The method of claim 1, wherein, based on the access to the NPCA primary channel, the STA performs PPDU transmission based on a first channel including the NPCA primary channel.

10. The method of claim 1, wherein, based on the access to the NPCA primary channel, the STA receives a PPDU through a second channel including the NPCA primary channel.

11. The method of claim 1, wherein the STA is an access point (AP) or a non-AP STA.

12. A station (STA), comprising:
at least one processor; and
at least one computer memory operatively connected to the at least one processor and storing instructions that, based on being executed by the at least one processor, perform operations comprising:
receiving, by the STA, an Overlapping Basic Service Set (OBSS) signal; and
performing, by the STA based on the OBSS signal, an access to a Non-primary Channel Access (NPCA) primary channel,
wherein the access to the NPCA primary channel is performed based on at least one of a Basic Network Allocation Vector (NAV) set for a primary channel based on the OBSS signal and a wait time related to the OBSS signal.

13. The STA of claim 12, wherein the instructions of the at least one computer memory perform operations related to any one of claims 2 to 11.

14. At least one computer readable medium (CRM) storing instructions that, based on being executed by at least one processor, perform operations comprising:
receiving, by a station (STA), an Overlapping Basic Service Set (OBSS) signal; and
performing, by the STA based on the OBSS signal, an access to a Non-primary Channel Access (NPCA) primary channel,
wherein the access to the NPCA primary channel is performed based on at least one of a Basic Network Allocation Vector (NAV) set for a primary channel based on the OBSS signal and a wait time related to the OBSS signal.

15. The computer readable medium of claim 14, wherein the computer readable medium performs operations related to any one of claims 2 to 11.
